# EUROPEAN PATENT SPECIFICATION

(11) **EP 1 308 821 B1**
(45) Date of publication and mention of the grant of the patent: **09.11.2005**
(21) Application number: 02019473.4
(22) Date of filing: 30.08.2002
(51) Int. Cl.: G06F 1/00

(54) **System and method for authentication**
System und Verfahren zur Authentifizierung
Système et procédé d'authentification

(30) Priority: 30.10.2001 JP 2001332701
(43) Date of publication of application: 07.05.2003
(73) Proprietor: Hitachi, Ltd., Chiyoda-ku, Tokyo 101-8010 (JP)
(72) Inventor: Aoshima, Hirokazu, Hitachi, Ltd., Int. Prop. Group, Chiyoda-ku, Tokyo 100-8220 (JP); Kaji, Tadashi, Hitachi, Ltd., Int. Prop. Group, Chiyoda-ku, Tokyo 100-8220 (JP); Matsushima, Hitoshi, Hitachi,Ltd., Int.Prop.Group, Chiyoda-ku, Tokyo 100-8220 (JP); Umezawa, Katsuyuki, Hitachi,Ltd., Int.Prop.Group, Chiyoda-ku, Tokyo 100-8220 (JP); Yoshiura, Hiroshi, Hitachi,Ltd., Int.Prop.Group, Chiyoda-ku, Tokyo 100-8220 (JP); Toyoshima, Hisashi, Hitachi,Ltd., Int.Prop.Group, Chiyoda-ku, Tokyo 100-8220 (JP)
(74) Representative: Strehl Schübel-Hopf & Partner

(56) References cited:
- WO-A-01/63387
- WO-A-97/14087
- WRONA K ET AL: "ADAPTATION OF THE SET PROTOCOL TO MOBILE NETWORKS AND TO THE WIRELESS APPLICATION PROTOCOL" ITG FACHBERICHTE, VDE VERLAG, BERLIN, DE, no. 157, 6 October 1999 (1999-10-06), pages 193-198, XP008009525 ISSN: 0932-6022
- "MeT Authorization for account based payment using a SET Wallet Server" MOBILE ELECTRONIC TRANSACTIONS, 21 February 2001 (2001-02-21), XP002221755 Retrieved from the Internet: <URL:http://www.mobiletransaction.org/pdf/ MeT-SET-Wallet-20010221.pdf> [retrieved on 2002-11-20]

## Description

### BACKGROUND OF THE INVENTION

The present invention relates to a technique for authentication of, for example, a user of an information terminal.

Recently, has been proposed a system that utilizes a network such as the Internet for providing various services to a user of an information terminal. For example, systems that utilize a network for distributing contents or for executing various procedures such as electronic commerce have been proposed.

Sometimes, at the time of providing a service, a service provider requires a user of an information terminal to present his private information. Private information is required for confirming that the user of the information terminal satisfies service providing conditions (for example, age) for enjoying the service provided by the service provider. Thus, in the conventional systems, a service provider's apparatus receives private information from a user of an information terminal through a network, judges whether the private information satisfies predetermined service providing conditions, and determines whether the service is to be provided, based on the result of the judgment.

### SUMMARY OF THE INVENTION

In the case of thus-described conventional systems that utilize a network for providing service, when a service provider requires a user of an information terminal to present his private information, the private information flows on the network, as described above. Further, it is possible to accumulate private information in the service provider's apparatus. This means that there is high possibility of outflow of the private information to a third party.

WO-A-0163387 discloses the features of the preamble of appended claim 1.

The present invention has been made taking the above-described circumstances into consideration, and reduces the possibility of outflow of private information at the time of authentication of an information terminal's user.

The authentication system and method of the present invention comprise a management apparatus that manages private information and a service providing apparatus that provides service to an information terminal, as defined in the appended claims.

For example, the above-mentioned management apparatus comprises:
a private information database that registers private information (information for specifying a person including, for example, name, address, age, and existence of bank account), associating that private information with personal identification information (for example, personal ID number);
a providing condition database that registers service providing conditions (for example, age condition and existence of bank account) required for providing the service; and further units as defined in claim 1.

According to the present invention, owing to the configuration defined in claims 1 and 10, the information terminal sends personal identification information as identification information of private information, to the service providing apparatus. Further, the management apparatus sends approval or denial information, which indicates approval or denial of providing the service, to said service providing apparatus. Thus, possibility of outflow of private information itself can be reduced.

In the above-mentioned management apparatus, the private information database may register private information together with a public key certificate, associating the private information and the public key certificate with personal identification information. Further, the above-mentioned determination processing unit may verify digital signature information added to the personal identification information sent from the service providing apparatus, using a public key certificate registered in association with the personal identification information in said private information database; perform the judgment, only when the verification is successful; determine approval or denial of providing the service depending on the result of the judgment; and, on the other hand, determine rejection of providing the service when the verification fails.

In that case, in the above-mentioned service providing apparatus, the personal identification information acquisition processing unit acquires the personal identification information added with the digital signature information, from the information terminal. And, the above-mentioned approval or denial information acquisition processing unit sends the management apparatus the personal identification information added with the digital signature information, which is acquired by the personal identification information acquisition processing unit, to acquire the approval or denial information from the said management apparatus.

Thus, it is possible to confirm that the user of the above-mentioned information terminal is a legitimate user specified by the private information corresponding to the personal identification information, by verifying the signature information that is generated by the information terminal and added to the personal identification information.

The authentication system of the present invention can be applied, for example, to a Web system in which browsing of a certain Web page is permitted only when private information satisfies predetermined service providing conditions. In that case, the above-mentioned information terminal functions as a Web browser, and the above-mentioned service providing apparatus functions as a Web server or as a network connecting apparatus that connects the information terminal to the Web server through a network.

Further, the authentication system of the present invention can be applied, for example, to a settlement system in which settlement required for purchasing a commodity or the like is permitted only when private information satisfies predetermined service providing conditions.

### BRIEF DESCRIPTION OF THE DRAWINGS

Fig. 1 is a schematic diagram showing an authentication system to which a first embodiment of the present invention is applied;
Fig. 2 is a schematic diagram showing the service providing apparatus 10 shown in Fig. 1;
Fig. 3 is a schematic diagram showing the management apparatus 20 shown in Fig. 1;
Fig. 4 is a diagram showing an example of contents of registration in the user certificate DB 202 shown in Fig. 3;
Fig. 5 is a diagram showing an example of contents of registration in the service providing condition DB 203 shown in Fig. 3;
Fig. 6 is a schematic diagram showing the information terminal 40 shown in Fig. 1;
Fig. 7 is a diagram showing an example of a hardware configuration of the service providing apparatus 10 or the management apparatus 20 shown in Fig. 1;
Fig. 8 is a diagram for explaining an operating procedure of the authentication system shown in Fig. 1;
Fig. 9 is a schematic diagram showing an authentication system to which a second embodiment of the present invention is applied;
Fig. 10 is a schematic diagram showing the service providing apparatus 30' shown in Fig. 9;
Fig. 11 is a diagram showing an example of contents of registration in the accounting DB 309 shown in Fig. 10;
Fig. 12 is a schematic diagram showing the management apparatus 20' shown in Fig. 9;
Fig. 13 is a diagram showing an example of contents of registration in the authentication mark DB 207 shown in Fig. 12;
Fig. 14 is a schematic diagram showing the information terminal 40' shown in Fig. 9;
Fig. 15 is a diagram for explaining an operating procedure of the authentication system shown in Fig. 9;
Fig. 16 is a view showing an example of a Web page displayed together with a authentication mark on the information terminal 40';
Fig. 17 is a view showing an example of a Web page displayed together with a authentication mark on the information terminal 40';
Fig. 18 is a view showing an example of a Web page displayed together with a authentication mark on the information terminal 40';
Fig. 19 is a view showing an example of a Web page displayed together with a authentication mark on the information terminal 40';
Fig. 20 is a view showing an example of a Web page displayed together with a authentication mark on the information terminal 40';
Fig. 21 is a schematic diagram showing an authentication system to which a third embodiment of the present invention is applied;
Fig. 22 is a schematic diagram showing the service providing apparatus 70 shown in Fig. 21;
Fig. 23 is a diagram showing an example of contents of registration in the settlement DB 705 shown in Fig. 22;
Fig. 24 is a diagram for explaining an operating procedure of the authentication system shown in Fig. 21; and
Fig. 25 is a diagram for explaining a variation of the operating procedure of the authentication system shown in Fig. 21.

### DETAILED DESCRIPTION

Now, embodiments of the present invention will be described.

As a first embodiment of the present invention, will be taken an example in which the authentication system of the present invention is applied to a system that permits browsing of a certain Web page only to an information terminal (Web browser) of a user who satisfies predetermined service providing conditions.

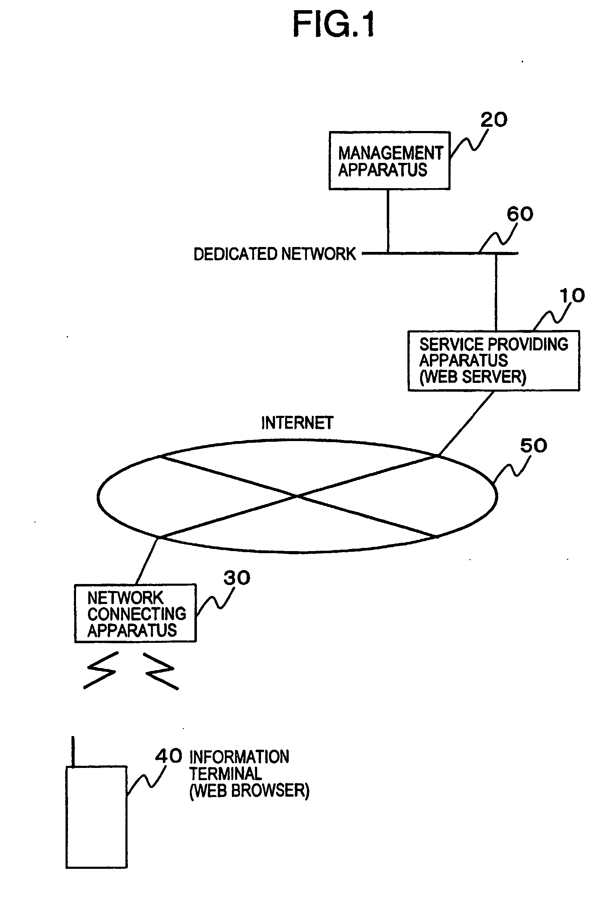

Fig. 1 is a schematic diagram showing an authentication system to which the first embodiment of the present invention is applied.

In Fig. 1, a service providing apparatus 10 has a function of a Web server, and makes a Web page displayed on an information terminal 40 that has accessed the service providing apparatus 10 through the Internet 50. Further, the information terminal 40 is a radio terminal such as a portable telephone having a Web browser function, a PDA (Personal Digital Assistant), or the like. Identification information of a user certificate issued to the user of the information terminal 40 is registered in the information terminal 40. As the identification information, may be employed information that alone can hardly specify the private information of the user. For example, a public key certificate may be used as the identification information. Hereinafter, an identification information number is referred to as certificate identification information. Further, the user certificate is electronic data that describes private information (for example, information such as name, address, age, and existence of bank account) required for certifying the user, and issued by an issuer that has legitimate authority. Further, a network connecting apparatus 30 has functions of a radio base station and an ISP (Internet Service Provider), and offers service of connecting the information terminal 40 to the Internet 50. A management apparatus 20 gives certificate identification information to a user certificate to manage it. Further, the management apparatus 20 manages providing conditions (hereinafter, referred to as a Web page providing conditions) of each Web page provided by the service providing apparatus 10, associating the Web page providing condition with identification information (URL (Uniform Resource Locator) or information that can specify URL) of the Web page concerned (hereinafter, this identification information is referred to as Web page identification information). In Fig. 1, the management apparatus 20 is connected to the service providing apparatus 10 through a dedicated network 60. When, however, a communication technique (such as cipher communication or the like) that can ensure security is employed, the management apparatus 20 and the service providing apparatus 10 may be connected through the Internet 50.

In the above-described configuration, when there is a user's instruction, the information terminal 40 accesses a desired Web page held in the service providing apparatus 10, through the network connecting apparatus 30 and the Internet 50. At that time, if the Web page that the information terminal 40 is to browse is one whose Web page providing condition is managed by the management apparatus 20, then, the service providing apparatus 10 acquires the certificate identification information from the information terminal 40, and sends a verification request, which includes the certificate identification information and the Web page identification information of the Web page in question, to the management apparatus 20. Receiving the verification request, the management apparatus 20 specifies the user certificate managed in association with the certificate identification information included in that verification request, and specifies the Web page providing condition managed in association with the Web page identification information included in that verification request. Then, the management apparatus 20 judges whether the private information described in the specified user certificate satisfies the specified Web page providing condition, to determine approval or denial of providing the Web page, and sends approval or denial information, which indicates the content of the decision, to the service providing apparatus 10. Receiving the approval or denial information from the management apparatus 20, the service providing apparatus 10 makes the information terminal 40 display the Web page that the information terminal 40 desires to browse, in the case where the content of the approval or denial information indicates permission to provide the Web page. On the other hand, in the case where the content indicates rejection of providing the Web page, the service providing apparatus 10 makes the information terminal 40 display, for example, a Web page telling a message that browsing of the desired Web page is rejected, instead of the Web page that the information terminal 40 desires to browse.

Thus, in the present embodiment, the information terminal 40 sends certificate identification information, i.e., the identification information of a user certificate, to the service providing apparatus 10. Further, the management apparatus 20 sends approval or denial information, which indicates approval or denial of providing the Web page, to the service providing apparatus 10. In other words, the user certificate itself is not transmitted on the Internet 50 or the dedicated network 60. Accordingly, possibility of outflow of a user certificate or private information described in a user certificate to a third party can be reduced.

Next, components of the system shown in Fig. 1, i.e., the service providing apparatus 10, the management apparatus 20 and the information terminal 40 will be described. In the present embodiment, a conventional apparatus having functions of a radio base station and an ISP can be used as the network connecting apparatus 30. Thus, description of the network connecting apparatus 30 is omitted.

First, the service providing apparatus 10 will be described.

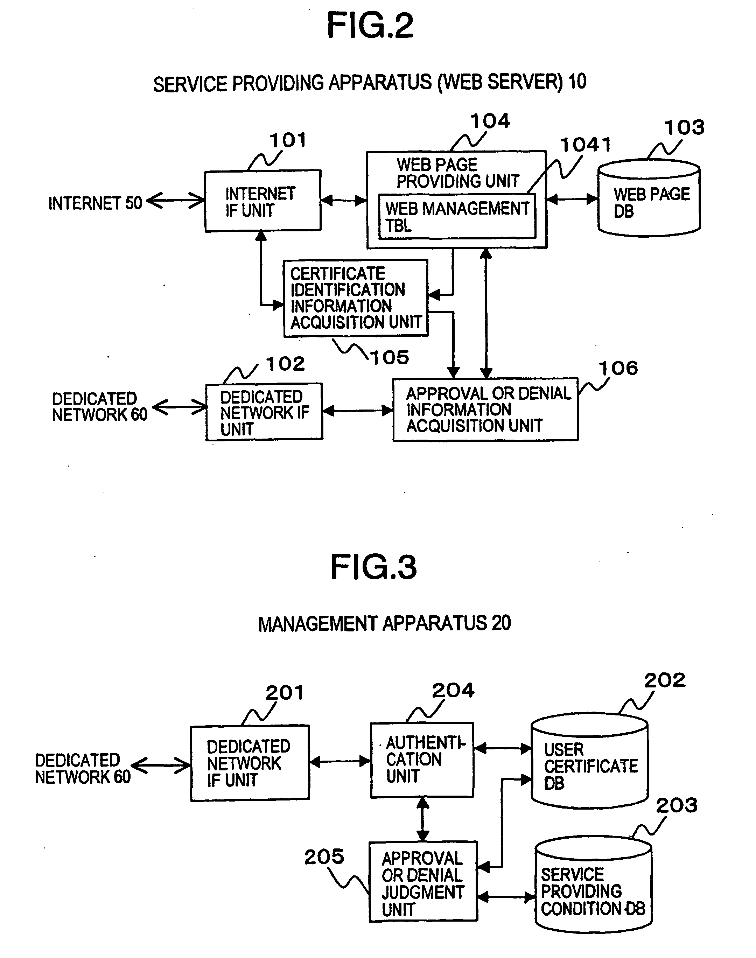

Fig. 2 is a schematic diagram showing the service providing apparatus 10.

In Fig. 2, an Internet IF unit 101 is an interface for communicating with the information terminal 40 through the Internet 50.

A dedicated network IF unit 102 is an interface for communicating with the management apparatus 20 through the dedicated network 60.

A Web page DB (database) 103 registers Web pages (HTML documents).

A Web page providing unit 104 manages correspondence between each Web page registered in the Web page DB 103 and its URL. Being accessed by the information terminal 40 through Internet IF unit 101, the Web page providing unit 104 reads the Web page corresponding to the URL of the destination of the access, from the Web page DB 103, and sends that Web page to the information terminal 40.

Further, the Web page providing unit 104 holds a Web management TBL (table) 1041. The Web management TBL 1041 registers Web page identification information of a Web page whose Web page providing condition is managed by the management apparatus 20, associating the Web page identification information with the URL of the Web page in question. However, in the case where Web page identification information is a URL, the Web management TBL 1041 registers Web page identification information of a Web page whose Web page providing condition is managed by the management apparatus 20. Being accessed by the information terminal 40 through the Internet IF unit 101, the Web page providing unit 104 examines whether the Web page identification information of the Web page corresponding to the URL of the destination of the access by the information terminal 40 is registered in the Web management TBL 1041, in order to judge whether permission of the management apparatus 20 is required to browse the Web page corresponding to the above-mentioned URL of the access destination.

A certificate identification information acquisition unit 105 acquires the certificate identification information (which is added with a signature by means of a signature key (for example, a secret key) of the user of the information terminal 40) from the information terminal 40, when the Web page providing unit 104 judges that permission of the management apparatus 20 is required to browse the Web page corresponding to the URL of the destination of the access by the information terminal 40 that has accessed the Web page providing unit 104 through the Internet IF unit 101.

When the Web page providing unit 104 judges that permission of the management apparatus 20 is required to browse the Web page corresponding to the URL of the destination of the access by the information terminal 40 that has accessed the Web page providing unit 104 through the Internet IF unit 101, an approval or denial information acquisition unit 106 acquires the Web page identification information of the Web page corresponding to the URL of the access destination, from the Web page providing unit 104, and acquires the certificate identification information, which is added with the signature by means of the signature key of the user of the information terminal 40, from the certificate identification information acquisition unit 105. Then, the approval or denial information acquisition unit 106 generates a verification request including the certificate identification information and the Web page identification information, and sends the verification request to the management apparatus 20 through the dedicated network IF unit 102. Then, receiving approval or denial information as an answer to the verification request, from the management apparatus 20, the approval or denial information acquisition unit 106 sends the received approval or denial information to the Web page providing unit 104.

When the Web page providing unit 104 receives the approval or denial information that indicates permission to browse the Web page, the Web page providing unit 104 reads the Web page corresponding to the above-mentioned URL of the access destination, from the Web page DB 103, and sends the Web page to the information terminal 40. On the other hand, when the approval or denial information indicates rejection of browsing the Web page, the Web page providing unit 104 reads a Web page corresponding to a predetermined URL (for example, a Web page telling a message that browsing of the desired Web page is rejected) from the Web page DB 103, to send it to the information terminal 40.

Next, the management apparatus 20 will be described.

Fig. 3 is a schematic diagram showing the management apparatus 20.

In Fig. 3, a dedicated network IF unit 201 is an interface for communicating with the service providing apparatus 10 through the dedicated network 60.

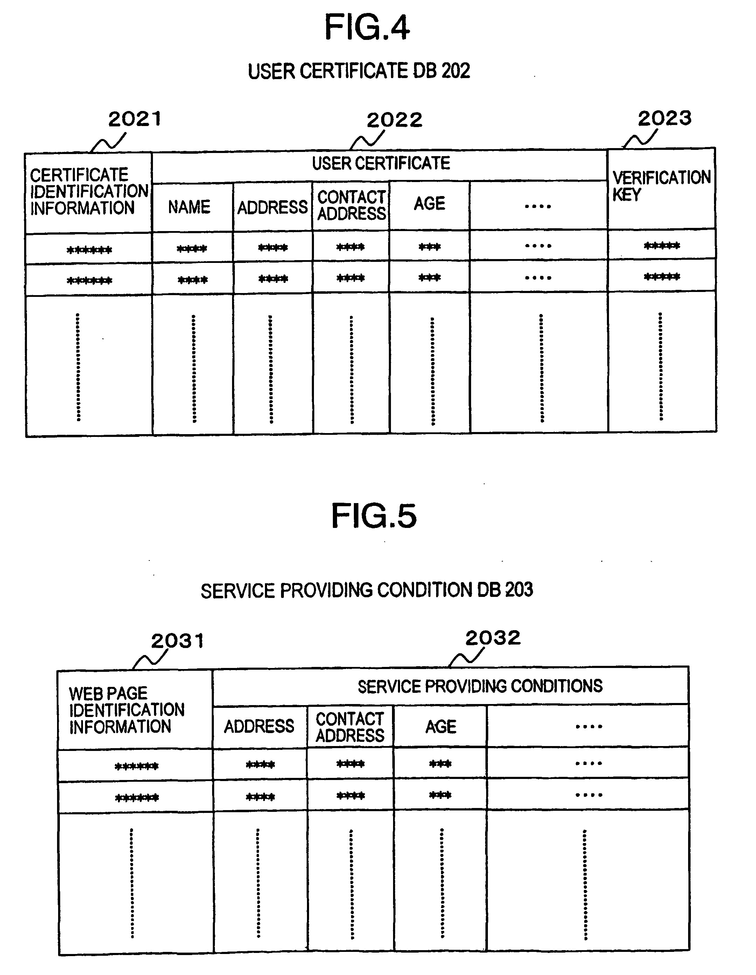

As shown in Fig. 4, a user certificate DB 202 registers private information (information representing person's attributes such as name, address, age, and existence of bank account) 2002 described in a user certificate and a verification key (for example, a public key certificate) 2023 for verifying a digital signature of a user, in association with certificate identification information 2021.

As shown in Fig. 5, a service providing condition DB 203 registers respective service providing conditions 2032 on the items constituting the private information, as conditions to be satisfied for browsing a Web page, in association with Web page identification information 2031.

An authentication unit 204 verifies a digital signature added to certificate identification information, using the verification key registered in the user certificate DB 202 being associated with the certificate identification information included in a verification request received from the service providing apparatus 10 through the dedicated network IF unit 201. When the verification of the digital signature is successful, then, the authentication unit 204 sends the certificate identification information included in the above-mentioned verification request and the Web page identification information to an approval or denial judgment unit 205, to acquire a judgment result on approval of browsing the Web page from the approval or denial judgment unit 205. Then, the authentication unit 204 generates approval or denial information indicating the judgment result, and sends the approval or denial information to the service providing apparatus 10 that sent the above-mentioned verification request. When the verification of the signature fails, the authentication unit 204 generates approval or denial information indicating that browsing of the Web page is rejected, and sends the approval or denial information to the service providing apparatus 10 that sent the above-mentioned verification request.

The approval or denial judgment unit 205 reads the service providing conditions registered in association with the Web identification information received from the authentication unit 204, in the service providing condition DB 203, and reads the private information of the user certificate registered in association with the certificate identification information received together with that Web page identification information from the authentication unit 204, in the user certificate DB 202. Then, the approval or denial judgment unit 205 examines whether the read private information satisfies the read service providing conditions. When the service providing conditions are satisfied, the approval or denial judgment unit 205 judges that browsing of the Web page is to be permitted. On the other hand, when the service providing conditions are not satisfied, the approval or denial judgment unit 205 judges that browsing of the Web page is to be rejected. Then, the judgment result is sent to the authentication unit 204.

Next, the information terminal 40 will be described.

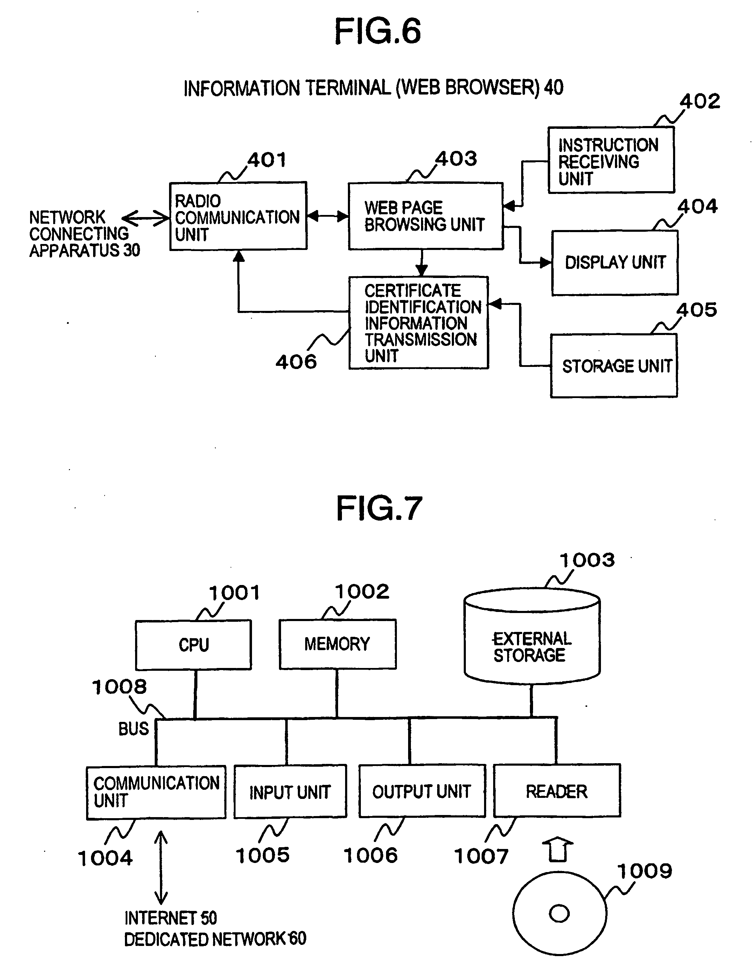

Fig. 6 is a schematic diagram showing the information terminal 40.

In Fig. 6, a radio communication unit 401 communicates wirelessly with the network connecting apparatus 30, and connects with the Internet 50 through the network connecting apparatus 30. An instruction receiving unit 402 comprises, for example, an operator panel, and receives input of various instructions and information from a user.

A Web page browsing unit 403 accesses the service providing apparatus 10 through the radio communication unit 401, acquires the Web page having a desired URL designated by the user through the instruction receiving unit 402, and displays the acquired Web page on a display unit 404 comprising, for example, a liquid crystal panel.

A storage unit 405 stores the certificate identification information and the signature key. Here, the storage unit 405 may be, for example, a memory card that can be inserted to and removed from the information terminal 40. In that case, suitably, the storage unit 405 may be provided from the issuer that issues a user certificate and a verification key. Or, the storage unit 405 may be a ROM directly mounted on a circuit board of the information terminal. In that case, suitably, a seller of the information terminal 40 may deliver the information terminal 40 to the user, in a state that the storage unit 405 stores the certificate identification information and the verification key.

According to an instruction received from the service providing apparatus 10 through the Web page browsing unit 403, a certificate identification information transmission unit 406 reads the certificate identification information and the verification key from the storage unit 405. Then, using the verification key, the certificate identification information transmission unit 406 generates a digital signature corresponding to the certificate identification information, and sends the certificate identification information added with the digital signature to the service providing apparatus 10.

Each of the service providing apparatus 10 and the management apparatus 20 having the above-described configurations may be implemented by a computer system of a common configuration such as shown in Fig. 7 for example, comprising a CPU 1001, a memory 1002, an external storage 1003 such as a hard disk unit, a reader 1007 for reading data from a portable storage medium 1009 such as a CD-ROM or DVD-ROM, an input unit 1005 such as a keyboard or mouse, an output unit 1006 such as a monitor, a communication unit 1004 for communicating with the Internet 50 or the dedicated network 60, and a bus 1008 connecting those component units. Or, each of the service providing apparatus 10 and the management apparatus 20 may be implemented by a network system comprising a plurality of such computer systems connected with one another through a network.

A program for realizing the above-mentioned service providing apparatus 10 or management apparatus 20 on such a computer system or network system may be loaded from an external storage 1003 or from a storage medium 1009 through the reader 1007 onto the memory 1002, to be executed by the CPU 1001. Or, such a program may be loaded from the Internet 50 or the dedicated network 60 through the communication unit 1004 onto the memory 1002, to be executed by the CPU 1001.

Further, the above-described information terminal 40 also may be implemented by a portable computer system, for example, having the hardware configuration of Fig. 7 without the reader 1007. In that case, an apparatus having a radio communication function, such as a portable telephone, may be used as the communication unit 1004. Further, a small-sized storage such as a ROM or a memory card may be used as the external storage 1003.

Next, operation of the authentication system having the above configuration will be described.

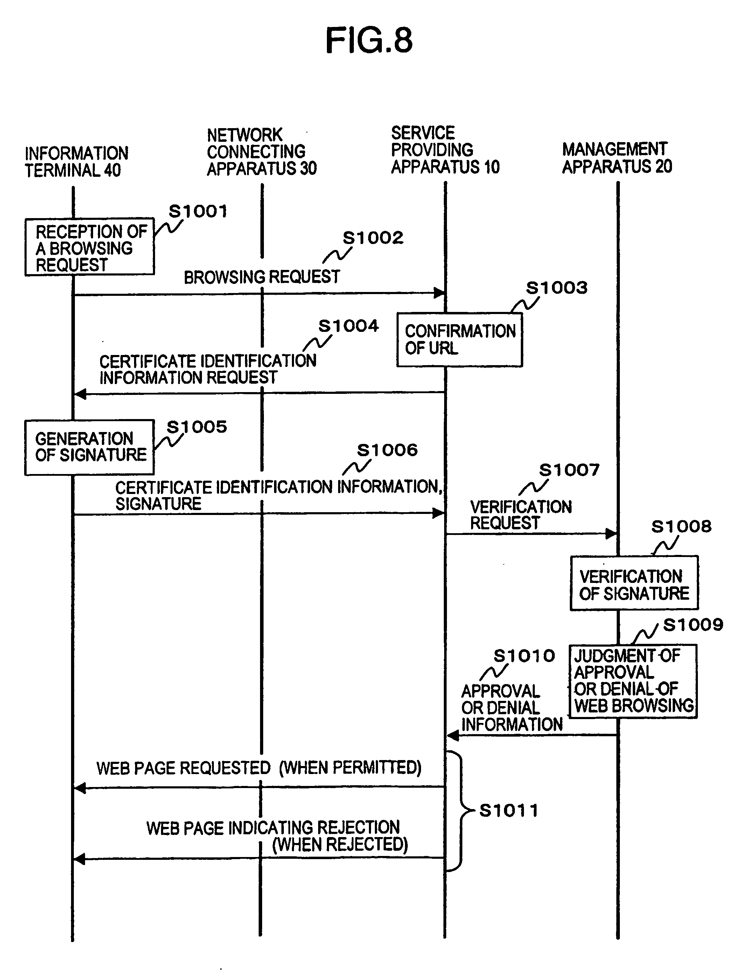

Fig. 8 is a diagram for explaining an operating procedure of the authentication system shown in Fig. 1.

First, in the information terminal 40, when a browsing request including designation of a URL is received from the user through the instruction receiving unit 402 (S1001), then, the Web browsing unit 403 accesses the service providing apparatus 10 through the radio communication unit 401 and the network connecting apparatus 30, to sends the above-mentioned browsing request (S1002).

In the service providing apparatus 10, when the browsing request is received from the information terminal 40 through the Internet IF unit 101, then, the Web page providing unit 104 confirms whether the URL included in the request is registered in the Web management TBL 1041 (S1003).

In the case where the URL included in the browsing request is not registered in the Web management TBL 1041, the Web page providing unit 104 reads the Web page corresponding to the above-mentioned URL from the Web page DB 103, and sends the Web page to the information terminal 40 through the Internet IF unit 101, so that the Web page browsing unit 403 of the information terminal 40 displays the Web page on the display unit 404. On the other hand, in the case where the URL included in the browsing request is registered in the Web management TBL 1041, the Web page providing unit 104 sends a message to that effect to the certificate identification information acquisition unit 105. Further, the Web page providing unit 104 sends the Web page identification information registered in association with the URL in the Web management TBL 1041 to the approval or denial information acquisition unit 106. Receiving the above-mentioned message, the certificate identification information acquisition unit 105 sends a certificate identification information transmission request to the information terminal 40 through the Internet IF unit 101 (S1004).

In the information terminal 40, when the Web page browsing unit 403 receives the certificate identification information transmission request from the service providing apparatus 10 through the radio communication unit 401, then, the Web page browsing unit 403 sends a message to that effect to the certificate identification information transmission unit 406. Receiving this message, the certificate identification information transmission unit 406 reads the certificate identification information and the signature key from the storage unit 405. Then, using the signature key, a digital signature to the certificate identification information is generated (S1005). Further, the certificate identification information transmission unit 406 adds the generated signature to the certificate identification information, to send them to the service providing apparatus 10 through the radio communication unit 401 (S1006).

Here, the transmissions and receptions for the certificate identification information communication between the service providing apparatus 10 and the information terminal 40 can be realized by utilizing Java (a trademark or registered trademark in USA and other countries, owned by Sun Microsystems, Inc., USA) or CGI (Common Gateway Interface), for example.

In the service providing apparatus 10, when the certificate identification information and signature are received from the information terminal 40 through the Internet IF 101, then, the certificate identification information acquisition unit 105 sends them to the approval or denial information acquisition unit 106. The approval or denial information acquisition unit 106 generates a verification request, which includes the certificate identification information and signature received from the certificate identification information acquisition unit 105 and the Web page identification information received from the Web page providing unit 104 in S1003, and sends the verification request to the management apparatus 20 through the dedicated network IF unit 102 (S1007).

In the management apparatus 20, when the verification request is received from the service providing apparatus 10 through the dedicated network IF unit 201, the authentication unit 204 reads the verification key registered in the user certificate DB 202 in association with the certificate identification information included in the verification request. Then, using the verification key, the authentication unit 204 verifies the signature to the certificate identification information, which is included in the verification request (S1008). When the verification of the signature is successful, then, the authentication unit 204 sends the certificate identification information and Web page identification information included in the verification request to the approval or denial judgment unit 205.

Receiving the certificate identification information and the Web page identification information, the approval or denial judgment unit 205 reads the user certificate registered in association with the certificate identification information in the user certificate DB 202, and reads the service providing conditions registered in association with the Web page identification information in the service providing condition DB 203. Then, the approval or denial judgment unit 205 examines whether the private information described in the user certificate satisfies the service providing conditions (for example, whether the age included in the private information satisfies the age condition prescribed in the service providing conditions). Then, the approval or denial judgment unit 205 sends the authentication unit 204 the judgment result to the effect that browsing of the Web page is permitted or rejected depending on whether the service providing conditions are or are not satisfied (S1009).

When the judgment result sent from the approval or denial judgment unit 205 indicates rejection of browsing the Web page, or when the verification of the signature fails in S1008, then, the authentication unit 204 generates approval or denial information to the effect that browsing of the Web page is rejected, and sends the approval or denial information to the service providing apparatus 10 through the dedicated network IF unit 201. On the other hand, when the judgment result sent from the approval or denial judgment unit 205 indicates permission to browse the Web page, then, the authentication unit 204 generates approval or denial information to that effect, and sends the approval or denial information to the service providing apparatus 10 through the dedicated network IF unit 201 (S1010).

In the service providing apparatus 10, when the approval or denial information is acquired from the management apparatus 20 through the dedicated network IF unit 102, then, the approval or denial information acquisition unit 106 sends the approval or denial information to the Web page providing unit 104. When the approval or denial information received from the approval or denial information acquisition unit 106 indicates permission to browse the Web page, then, the Web page providing unit 104 reads the Web page corresponding to the URL included in the browsing request received in S1002, from the Web page DB 103, and sends the Web page to the information terminal 40 through the Internet IF unit 101, to make the Web page browsing unit 403 of the information terminal 40 display the Web page on the display unit 404. On the other hand, when the approval or denial information indicates rejection of browsing the Web page, the Web page providing unit 104 reads the Web page corresponding to the predetermined URL (for example, a Web page telling a message that browsing of the desired Web page is rejected) from the Web page DB 103, and sends the read Web page to the information terminal 40 through the Internet IF unit 101, to make the Web browsing unit 403 of the information terminal display this Web page on the display unit 404 (S1011).

Hereinabove, the first embodiment of the present invention has been described.

In the present embodiment, the information terminal 40 sends certificate identification information of a user certificate to the service providing apparatus 10. Further, the management apparatus 20 sends approval or denial information indicating approval or denial of browsing a Web page to the service providing apparatus 10. Thus, possibility of outflow of private information itself, which is described in a user certificate, can be reduced.

Further, in the present embodiment, the management apparatus 20 registers a user certificate together with the verification key (for example, a public key certificate) of the signature, associating them with the certificate identification information, in the user certificate DB 202. And, the authentication unit 204 verifies a digital signature to certificate identification information included in a verification request sent from the service providing apparatus 10, using the verification key registered in association with the certificate identification information in the user certificate DB 202. By this arrangement, it is possible to confirm that the user of the information terminal 40 is a legitimate user who can be specified by the user certificate corresponding to the certificate identification information.

In the above-described embodiment, the service providing apparatus 10 may be provided with an authentication unit for verification of a signature, so that verification of a signature added to certificate identification information is performed in the service providing apparatus 10 instead of the authentication unit 204 of the management apparatus 20. In that case, the service providing apparatus 10 may acquire the verification key together with the certificate identification information and the signature to the certificate identification information, from the information terminal 40.

Further, in the above-described embodiment, the service providing apparatus 10 may be provided with an approval or denial judgment unit so that the judgment on approval or denial of browsing a Web page is made in the service providing apparatus 10 instead of the approval or denial judgment unit 205 of the management apparatus 20. In that case, the service providing condition DB 203 of the management apparatus 20 registers private information items required for judgment of approval or denial of browsing a Web page, in association with the Web page identification information concerned. The service providing apparatus 10 is made to send an information transmission request including certificate identification information and Web page identification information, to the management apparatus 20. Then with respect to the private information items registered in the service providing condition DB 203 in association with the Web page identification information included in the above-mentioned information transmission request, the management apparatus 20 extracts those private information items from the user certificate registered in the user certificate DB 202 in association with the certificate identification information included in the above-mentioned information transmission request, and sends the extracted private information items to the service providing apparatus 10. In this case also, possibility of outflow of private information can be reduced in comparison with the conventional case, since the private information sent to the service providing apparatus 10 is limited to the private information items whose transmission is permitted by the management apparatus 20 (i.e., information items actually required for judgment on Web page browsing).

Further, in the above-described embodiment, the certificate identification information acquisition unit 105 of the service providing apparatus 10 may have the following function. Namely, prior to acquisition of certificate identification information from an information terminal 40, the certificate identification information acquisition unit 105 displays a message asking whether transmission of the certificate identification information is agreed, on the display unit 404 of the information terminal 40. And, only when the user of the information terminal 40 agrees, the certificate identification information is acquired from the information terminal 40.

Next, a second embodiment of the present invention will be described.

As the second embodiment of the present invention, will be taken an example in which the authentication system of the present invention is applied to a system in which a service providing apparatus (a network connecting apparatus) permits access to a certain Web page opened by a Web server, only to an information terminal (a Web browser) of a user who satisfies predetermined service conditions.

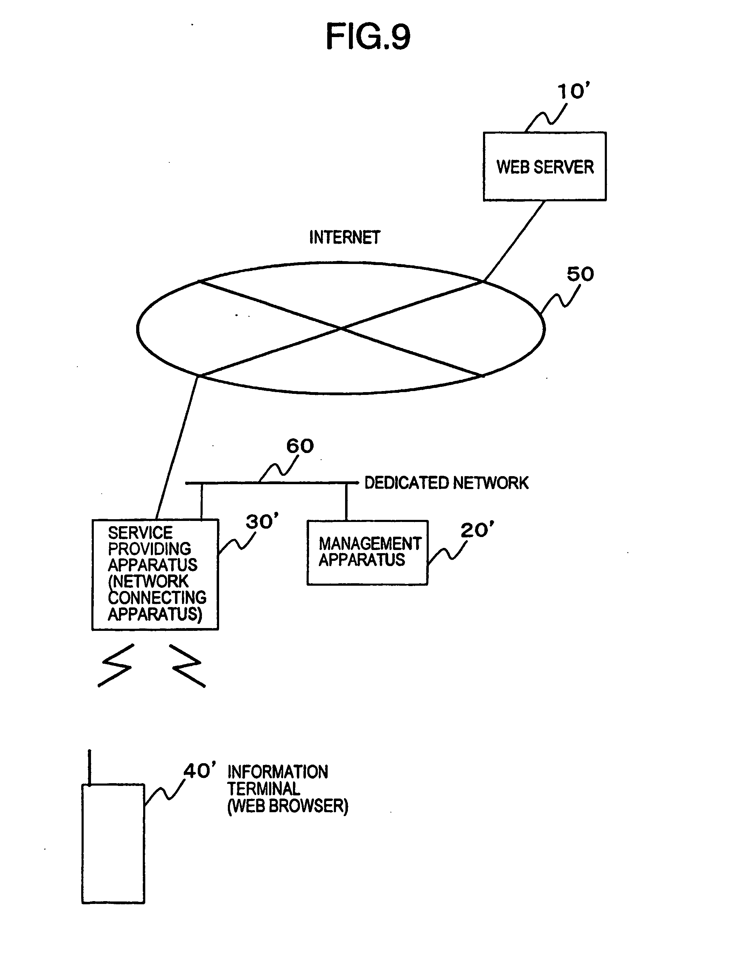

Fig. 9 is a schematic diagram showing an authentication system to which the second embodiment of the present invention is applied. In this figure and Fig. 1 showing the first embodiment, same reference numerals refer to elements having same functions.

In Fig. 9, a Web server 10' makes an information terminal 40' display a Web page, when the information terminal 40' accesses the Web server 10' through the Internet 50. Here, in the Web server 10', a Web page used for moving to a Web page to which Web page providing conditions are set includes an authentication mark that has been issued to the above-mentioned Web page to which the Web page providing conditions are set, or to a person concerned such as a sender or author of that Web page. The authentication mark is electronic image data in which Web page attribute information and a signature to the Web page attribute information are embedded utilizing the electronic watermark technique or the like. Here, the Web page attribute information is, for example, Web page identification information (such as URL) and other relevant information required for certifying a Web page. An authentication mark is issued by an issuer that has legitimate authority. Further, a service providing apparatus 30' has a function as a network connecting apparatus, or, in detail, functions as a radio base station and an ISP, and offers service of connecting the information terminal 40' to the Internet 50. And, a management apparatus 20' gives certificate identification information to a user certificate to manage it, and manages Web page identification information of a Web page certified by a authentication mark, associating the Web page identification information with the Web page providing conditions of the Web page in question and the Web page identification information (referred to as related Web page identification information) of the Web page that includes the authentication mark in question.

In Fig. 9, the management apparatus 20' is connected to the service providing apparatus 30' through a dedicated network 60. However, the management apparatus 20' and the service providing apparatus 30' may be connected through the Internet 50, when a communication technique (such as cipher communication or the like) that can ensure security is employed.

In the above-described configuration, when there is a user's instruction, the information terminal 40' accesses the Web server 10' through the network connecting apparatus 30' and the Internet 50, to display a desired Web page. At that time, if the displayed Web page includes a authentication mark, the user of the information terminal 40' can use the authentication mark in order to access the Web page certified by the authentication mark, and/or in order to acquire information on relation between the above-mentioned displayed Web page (Web page added with the authentication mark) and the Web page certified by the above-mentioned authentication mark.

When the Web page that the information terminal 40' is to browse is a Web page whose Web page providing conditions are managed by the management apparatus 20', namely, the Web page certified by the authentication mark, then, the service providing apparatus 30' acquires the certificate identification information from the information terminal 40', and sends a verification request, which includes the certificate identification information and the Web page identification information of the Web page in question, to the management apparatus 20'. Receiving the verification request, the management apparatus 20' specifies the user certificate managed in association with the certificate identification information included in the verification request, and specifies the Web page providing conditions managed in association with the Web page identification information included in the verification request. Then, the management apparatus 20' judges whether the private information described in the specified user certificate satisfies the above-mentioned specified Web page providing conditions, to determine approval or denial of providing the Web page, and sends approval or denial information that indicates the content of the determination to the service providing apparatus 30'. Receiving the approval or denial information from the management apparatus 20', the service providing apparatus 30' permits the information terminal 40' to access the Web page that the information terminal 40 desires to browse, when the content of the determination indicates permission to provide the Web page. On the other hand, when the content of the determination indicates rejection of providing the Web page, the service providing apparatus 30' makes the information terminal 40' display, for example, a Web page including a message that access to the desired Web page is rejected, instead of the Web page that the information terminal 40' desires to browse.

Further, when the service providing apparatus 30' receives a relation verification request, which includes Web page attribution information and related Web page identification information, from the information terminal 40', the service providing apparatus 30' sends the relation verification request to the management apparatus 20'. Receiving the relation verification request, the management apparatus 20' examines whether the Web page identification information of the Web page specified by the Web page attribute information included in the relation verification request is managed in association with the related Web page identification information included in the relation verification request. Then, the management apparatus 20' sends the result (referred to as relation verification result) to the service providing apparatus 30'. Based on the relation verification result received from the management apparatus 20', the service providing apparatus 30' makes the information terminal 40' display a message on the relation between the Web page displayed by the information terminal 40' and the Web page certified by the above-mentioned authentication mark.

Thus, in the present embodiment, the information terminal 40' sends the service providing apparatus 30' certificate identification information of a user certificate. Further, the management apparatus 20' sends the service providing apparatus 30' approval or denial information that indicates approval or denial of providing a Web page. In other words, a user certificate itself is not transmitted on the Internet 50 or the dedicated network 60. Accordingly, possibility of outflow of a user certificate or private information described in a user certificate to a third party can be reduced.

Further, in the present embodiment, the user of the information terminal 40' can use a authentication mark added to a Web page to confirm a relation between the Web page in question and a Web page certified by the above-mentioned authentication mark. Thus, from the viewpoint of the user of the information terminal 40', security of using a Web is improved.

Next, components of the system shown in Fig. 9, i.e., the service providing apparatus 30', the management apparatus 20' and the information terminal 40' will be described. In the present embodiment, a conventional Web server can be used as the Web server 10'. And, thus, description of the Web server 10' is omitted.

First, the service providing apparatus 30' will be described.

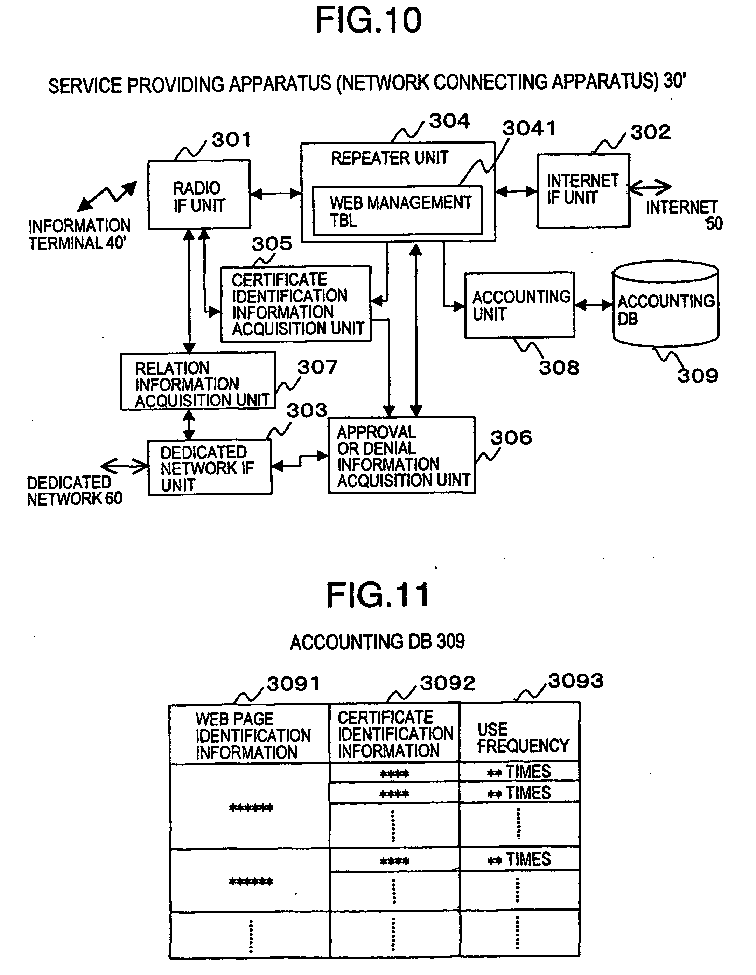

Fig. 10 is a schematic diagram showing the service providing apparatus 30'.

In Fig. 10, a radio IF unit 301 is an interface for communicating with the information terminal 40' by radio communication.

An internet IF unit 302 is an interface for communicating with the Web server 10' through the Internet 50.

A dedicated network IF unit 303 is an interface for communicating with the management apparatus 20' through the dedicated network 60.

A repeater unit 304 connects the radio IF unit 301 and the Internet IF unit 302 to relay communication between the Web server 10' and the information terminal 40'.

Further, the repeater unit 304 holds a Web management TBL 3041. The Web management TBL 3041 registers Web page identification information of a Web page whose Web page providing conditions are managed by the management apparatus 20', associating the Web page identification information with the URL of the Web page in question. However, in the case where Web page identification information is a URL, the Web management TBL 3041 registers Web page identification information of a Web page whose Web page providing conditions are managed by the management apparatus 20'. The repeater unit 304 examines whether the Web page identification of the Web page corresponding to the URL of the destination of the access by the information terminal 40', which is in communication with the radio IF unit 301, is registered in the Web management TBL 3041, in order to judge whether permission of the management apparatus 20' is required to access the Web page corresponding to the above-mentioned URL of the access destination.

A certificate identification information acquisition unit 305 acquires the certificate identification information added with a signature by means of a signature key (for example, a secret key) of the user of the information terminal 40', from the information terminal 40', when the repeater unit 304 judges that permission of the management apparatus 20' is required to access the Web page corresponding to the URL of the destination of the access by the information terminal 40' in communication with the radio IF unit 301.

When the repeater unit 304 judges that permission of the management apparatus 20' is required to access the Web page corresponding to the URL of the destination of the access by the information terminal 40' that is in communication with the radio IF unit 301, then, an approval or denial information acquisition unit 306 acquires the Web page identification information of the Web page corresponding to the above-mentioned URL of the access destination, from the repeater unit 304, and acquires the certificate identification information added with the signature by means of the signature key of the user of the information terminal 40', from the certificate identification information acquisition unit 305. Then, the approval or denial information acquisition unit 306 generates verification request including the Web page identification information and the certificate identification information, and sends the verification request to the management apparatus 20' through the dedicated network IF unit 303. Then, receiving approval or denial information as an answer to the verification request, from the management apparatus 20', the approval or denial information acquisition unit 306 sends the received approval or denial information to the repeater unit 304.

When the repeater unit 304 receives the approval or denial information that indicates permission to access the Web page, the repeater unit 304 relays communication between the Web server 10' and the information terminal 40', to permit access to the Web page corresponding to the above-mentioned URL of the access destination. On the other hand, when the approval or denial information indicates rejection of accessing the Web page, the repeater unit 304 does not relays communication between the Web server 10' and the information terminal 40', and sends the information terminal 40' a predetermined Web page (for example, a Web page describing a message that browsing of the desired Web page is rejected) in the management apparatus 30'.

A relation information acquisition unit 307 sends the relation verification request, which is received from the information terminal 40' through the radio IF unit 301, to the management apparatus 20' through the dedicated network IF unit 303. Then, the relation information acquisition unit 307 receives from the management apparatus 20' a relation verification result, which includes the verification result on a relation between the Web page displayed by the information terminal 40' (the Web page added with the authentication mark) and the Web page certified by the authentication mark, and sends the information terminal 40' a message on the above-mentioned relation, based on this relation verification result.

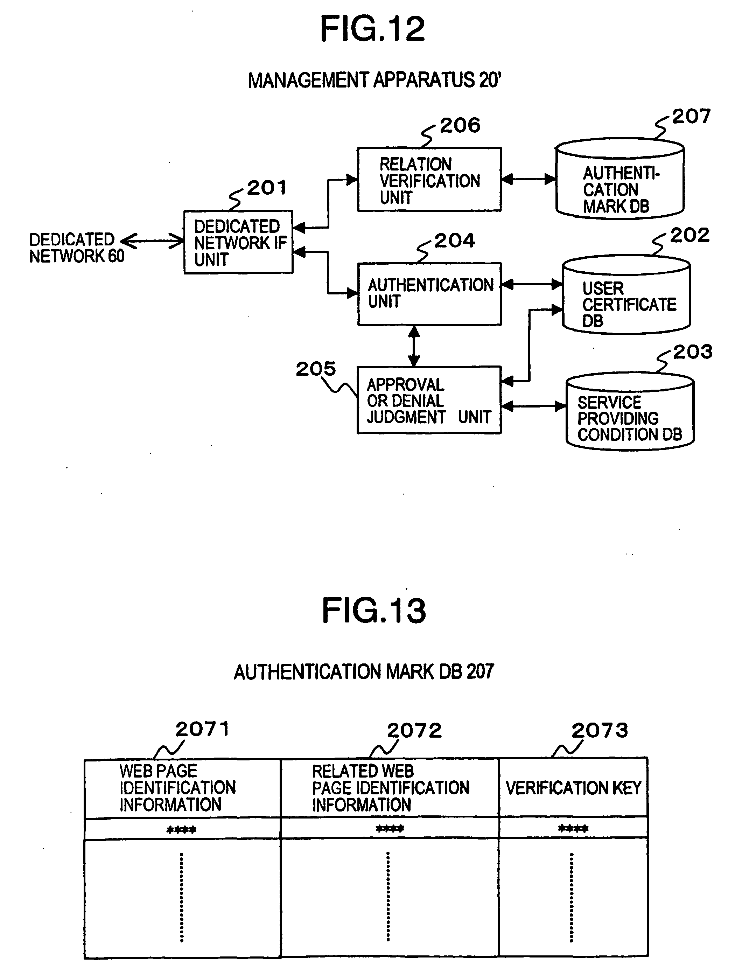

As shown in Fig. 11, for each Web page identification information 3091 of a Web page managed in the Web management TBL 3041, an accounting DB 309 registers certificate identification information 3092 of a user of an information terminal 40' who has used the Web page and the frequency 3093 of using the Web page, in association with the Web page identification information 3091 in question. The registration contents of the accounting DB 309 are used as accounting information for calculating charges to a user of an information terminal 40' for using Web pages (Web pages managed by the Web management TBL 3041).

When the repeater unit 304 permits the information terminal 40' to access a Web page whose Web page identification information is managed by the Web management TBL 3041, then, an accounting unit 308 adds 1 to the frequency of using the Web page that is associated with the above-mentioned Web page identification information and the certificate identification information of the user of the information terminal 40' in the accounting DB 309. Or, the accounting unit 308 registers anew the certificate identification information of the user and the use frequency "1", in association with the above-mentioned Web page identification information, in the accounting DB 309.

Next, the management apparatus 20' will be described.

Fig. 12 is a schematic view showing the management apparatus 20'. In this figure and Fig. 3 showing the management apparatus 20, same reference numerals refer to elements having same functions.

As shown in Fig. 13, for each Web page identification information 2071 of a Web page certified by an authentication mark, an authentication mark DB 207 shown in Fig. 12 registers related Web page identification information 2072, as Web page identification information of a Web page displayed together with the authentication mark, and the verification key (for example, a public key certificate) 2073 for verifying a signature of the authentication mark issuer.

Using a verification key registered in the authentication mark DB 207 in association with Web page identification information included in a relation verification request received from the service providing apparatus 30' through the dedicated network IF unit 201, a relation verification unit 206 verifies the signature added to the Web page identification information. When the verification of the signature is successful, then, the relation verification unit 206 examines whether the related Web page identification information registered in the authentication mark DB 207 in association with the Web identification information included in the above-mentioned relation verification request coincides with the related Web identification information included in the above-mentioned relation verification request. Then, the relation verification unit 206 generates a relation verification result including the results of the above-mentioned verification of the signature and the verification of the coincidence), and sends the relation verification result to the service providing apparatus 30' that has sent the verification request.

Next, the information terminal 40' will be described.

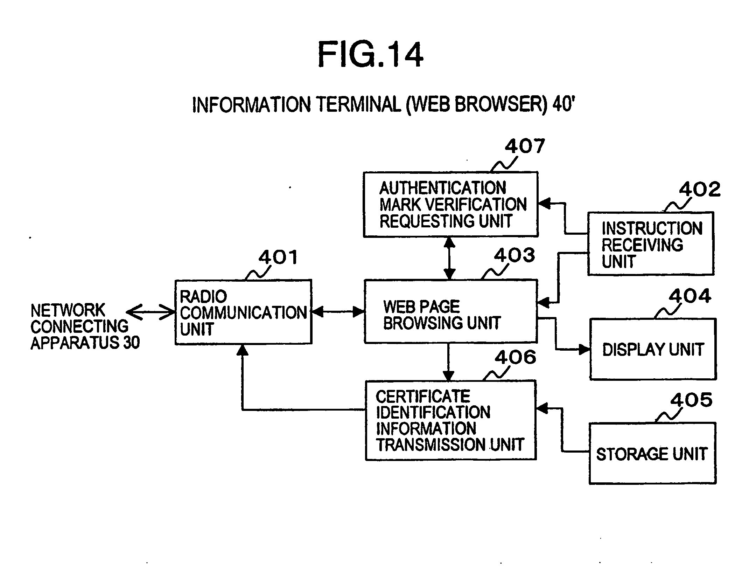

Fig. 14 is a schematic diagram showing the information terminal 40'. In this figure and Fig. 6 showing the information terminal 40, same reference numerals refer to elements having same functions.

In Fig. 14, an authentication mark verification requesting unit 407 monitors a user's instruction inputted to a Web page displayed by the Web page browsing unit 403 and to an instruction receiving unit 402, in order to detect an action of selecting the authentication mark displayed in the Web page of the user. This can be realized, for example, by predetermining a name or a file extension of image data expressing an authentication mark, and by examining whether a name or a file extension of data that is specified in an HTML document to be displayed at the location selected by a user by means of a pointing device or the like is the above-mentioned name or the file extension predetermined.

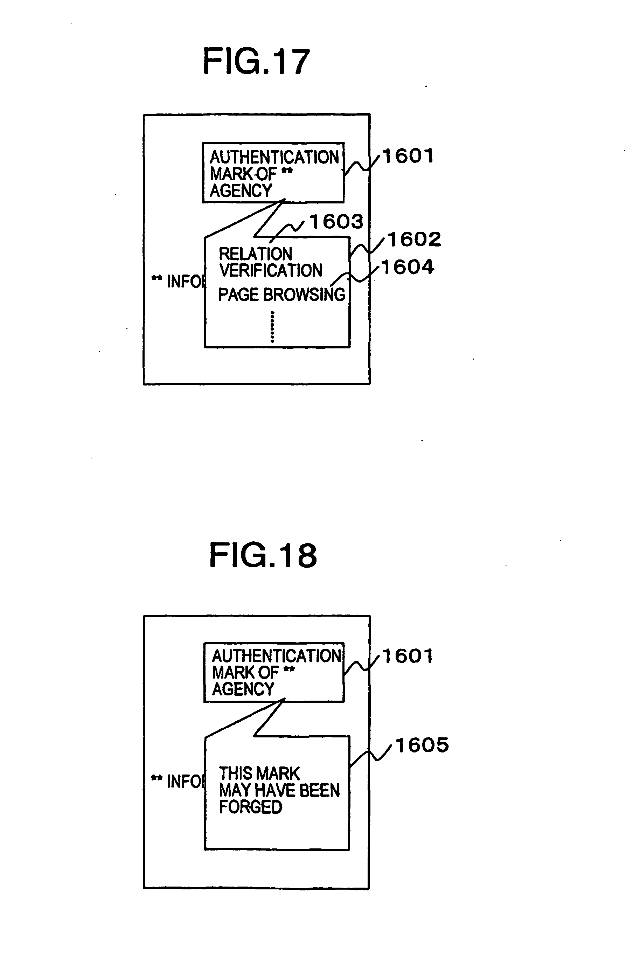

When the above-mentioned action of selecting is detected, then, for example as shown in Fig. 17, the authentication mark verification requesting unit 407 displays a menu for receiving an instruction of a user, such as an instruction of a relation verification request or an instruction of a browsing request for the Web page certified by the authentication mark, using a balloon display or the like. When an instruction of a relation verification request is received from the user through the menu, then, the authentication mark verification requesting unit 407 extracts the Web page identification information and the signature of the authentication mark issuer, which are embedded in the authentication mark utilizing the electronic watermark technique or the like. Then, the authentication mark verification requesting unit 407 generates a relation verification request, which includes the extracted identification information and signature and the URL of the Web page displayed now by the Web page browsing unit 403, and sends the generated request to the service providing apparatus 30' through the radio communication unit 401. On the other hand, when an instruction of a browsing request is received, the authentication mark verification requesting unit 407 extracts the Web page identification information embedded in the authentication mark, using the electronic watermark technique or the like, generates a browsing request including the URL specified by the extracted Web page identification information, and sends the request to the service providing apparatus 30' through the radio communication unit 401.

Similarly to the management apparatus 20 etc. of the first embodiment, also each of the service providing apparatus 30' and the management apparatus 20' having the above-described configurations may be implemented, for example, by the computer system having the configuration shown in Fig. 7, or by a network system comprising a plurality of such computer systems connected one another through a network.

Similarly, also the above-described information terminal 40' may be implemented by a portable computer system, for example, having the hardware configuration of Fig. 7 without the reader 1007. In that case, an apparatus having a radio communication function, such as a portable telephone, may be used as the communication unit 1004. Further, a small-sized storage such as a ROM or a memory card may be used as the external storage 1003.

Next, operation of the authentication system having the above configuration will be described.

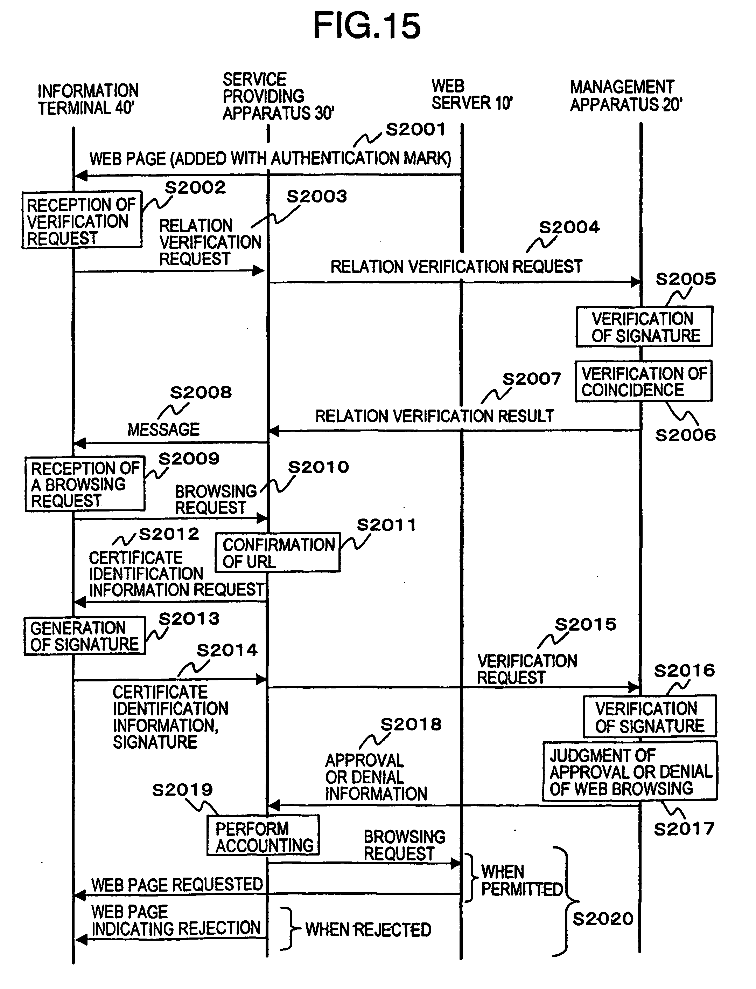

Fig. 15 is a diagram for explaining an operating procedure of the authentication system shown in Fig. 9.

In the service providing apparatus 30', when a Web page browsing request including designation of a URL is received from the information terminal 40' through the radio communication IF unit 301, the repeater unit 304 confirms whether this URL is registered in the Web management TBL 3041. In the case where the URL is not registered, the repeater unit 304 sends the browsing request to the Web server 10' through the Internet IF unit 302. Receiving this, the Web server 10' sends the Web page corresponding to the URL included in the above-mentioned browsing request, to the information terminal 40' through the service providing apparatus 30'. The information terminal 40' displays the Web page received from the Web server 10' through the service providing apparatus 30'. At that time, when the Web page includes an authentication mark, this authentication mark is displayed additionally (S2001).

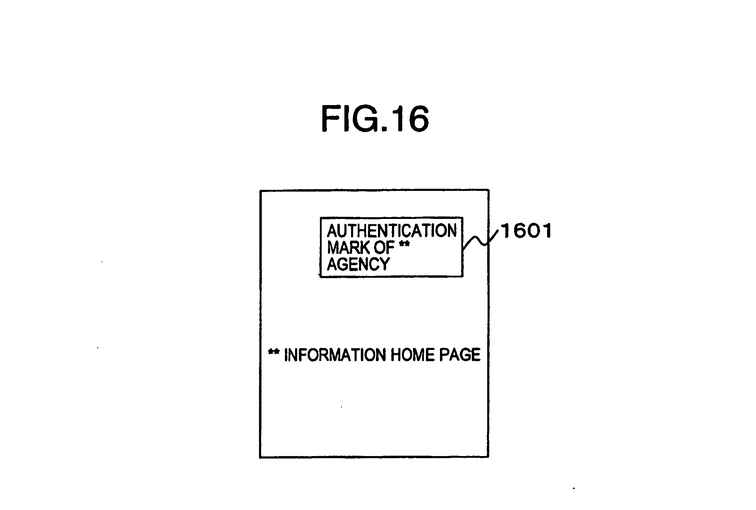

Fig. 16 shows an example of a Web page including an authentication mark. As described above, the authentication mark 1601 is embedded with the Web page identification information of the Web page certified by the authentication mark and the signature of the authentication mark issuer to the Web page identification information.

In the information terminal 40', when the authentication mark verification requesting unit 407 detects that the authentication mark 1601 on the Web page displayed by the Web page browsing 403 is selected by the user through the instruction receiving unit 402, then, the authentication mark verification requesting unit 407 displays a balloon menu 1602 as shown in Fig. 17 on the Web page. Here, the balloon menu includes items for receiving instructions such as an instruction 1603 of a relation verification request and an instruction 1604 of a Web page browsing request.

When, in the screen shown in Fig. 17, the authentication mark verification requesting unit 407 detects that the user selects the instruction 1603 of the relation verification request through the instruction receiving unit 402 (S2002), then, the authentication mark verification requesting unit 407 extracts the Web page identification information and the signature to the Web page identification information embedded in the authentication mark 1601, utilizing the electronic watermark technique, or the like. Further, the authentication mark verification requesting unit 407 generates a relation verification request, which includes the extracted information and the related Web page identification information specified from the URL of the Web page displayed now, or the like, and sends the generated relation verification request to the service providing apparatus 30' through the radio communication unit 401 (S2003).

In the service providing apparatus 30', the relation information acquisition unit 307 sends the relation verification request, which is received from the information terminal 40' through the radio IF unit 301, to the management apparatus 20' through the dedicated network IF unit 303 (S2004).

In the management apparatus 20', receiving the relation verification request from the service providing apparatus 30' through the dedicated network IF unit 303, the relation verification unit 206 reads the verification key registered in the authentication mark DB 207 in association with the Web page identification information included in the relation verification request. Then, using the verification key, the relation verification unit 206 verifies the signature added to the Web page identification information (S2005).

When the verification of the signature is successful, the relation verification unit 206 verifies whether the related Web page identification information registered in the authentication mark DB 207 in association with the Web page identification information included in the relation verification request coincides with the related Web page identification information included in the relation verification request (S2006).

Then, the relation verification unit 206 generates a relation verification result, which includes the results of the verification of the signature and the verification of the coincidence, and sends the relation verification result to the service providing apparatus 30' through the dedicated network IF unit 201 (S2007).

In the service providing apparatus 30', receiving the relation verification result from the management apparatus 20' through the dedicated network IF unit 303, the relation information acquisition unit 307 sends a message corresponding to the contents of the relation verification result to the information terminal 40' through the IF unit 301 (S2008).

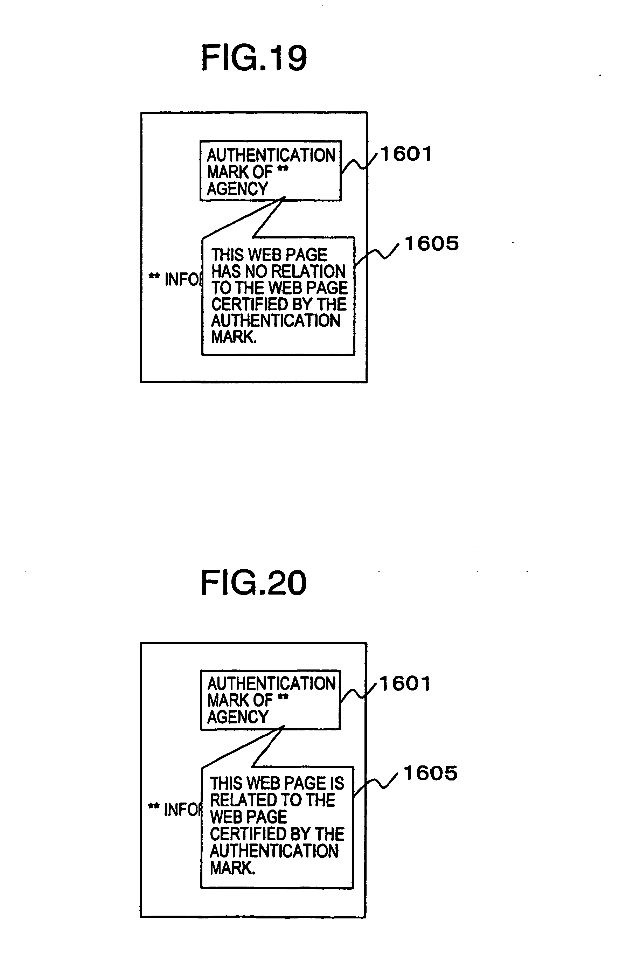

In response, the authentication mark verification requesting unit 407 of the information terminal 40' displays the message 1605 received from the service providing apparatus 30' through the radio communication unit 401, on the Web page, as shown in Figs. 18 - 20. Here, Fig. 18 shows an example for the case where the signature verification in S2005 fails. In this case, there is a possibility that the authentication mark is generated illegally by a third party other than the authentication mark issuer. Fig. 19 shows an example for the case where the signature verification in S2005 is successful but the coincidence verification in S2006 fails. In this case, there is a high possibility that the authentication mark issued by the authentication mark issuer is used illegally by a third party who does not have a legitimate right of using. And, Fig. 20 shows an example for the case where both the signature verification in S2005 and coincidence verification in S2006 are successful. In this case, there is a strong possibility that the authentication mark issued by the authentication mark issuer is used by a person who has a legitimate right of using the authentication mark.

On the other hand, in the screen shown in Fig. 17, when the authentication mark verification requesting unit 407 detects that the user selects the instruction 1604 of the browsing request through the instruction receiving unit 402 (S2009), then, the authentication mark verification requesting unit 407 extracts the Web page identification information embedded in the authentication mark 1601, utilizing the electronic watermark technique, or the like. Then, the authentication mark verification requesting unit 407 generates a browsing request including the URL specified by the Web page identification information, and sends the browsing request to the service providing apparatus 30' through the radio communication unit 401 (S2010).

In the service providing apparatus 30', receiving the Web page browsing request including the designation of the URL from the information terminal 40' through the radio IF unit 301, the repeater unit 304 confirms whether the URL is registered in the Web management TBL 3041 (S2011). When it is registered, the repeater unit 304 sends a message to that effect to the certificate identification information acquisition unit 305. Further, the repeater unit 304 sends the Web page identification information registered in association with the URL in the Web management TBL 3041 to the approval or denial information acquisition unit 306. Receiving the message, the certificate identification information acquisition unit 305 sends a certificate identification information transmission request to the information terminal 40' through the radio IF unit 301 (S2012).

In the information terminal 40', receiving the certificate identification information transmission request from the service providing apparatus 30' through the radio communication unit 401, the Web browsing unit 403 sends a message to that effect to the certificate identification information transmission unit 406. Receiving the message, the certificate identification information transmission unit 406 reads the certificate identification information and the verification key from the storage unit 405, and generates a digital signature to the certificate identification information, using the verification key (S2013). Then, the certificate identification information transmission unit 406 sends the certificate identification information added with the generated signature, to the service providing apparatus 30' through the radio communication unit 401 (S2014).

In the service providing apparatus 30', receiving the certificate identification information and the signature from the information terminal 40' through the radio IF unit 301, the certificate identification information acquisition unit 305 sends them to the approval or denial information acquisition unit 306. The approval or denial information acquisition unit 306 generates a verification request including the certificate identification information and signature received from the certificate identification information acquisition unit 305 and the Web page identification information received in S2011 from the repeater unit 304, and sends the verification request to the management apparatus 20' through the dedicated network IF unit 303 (S2015).

In the management apparatus 20', receiving the verification request from the service providing apparatus 30' through the dedicated network IF unit 201, the authentication unit 204 reads the verification key registered in the user certificate DB 202 in association with the certificate identification information included in the verification request. Then, using the verification key, the authentication unit 204 verifies the signature to the certificate identification information, which is included in the verification request (S2016). When the verification of the signature is successful, the authentication unit 204 sends the approval or denial judgment unit 205 the certificate identification information and Web page identification information included in the verification request.

Receiving them, the approval or denial judgment unit 205 reads the user certificate registered in association with the certificate identification information in the user certificate DB 202, and reads the service providing conditions registered in association with the Web page identification information in the service providing condition DB 203. Then, the approval or denial judgment unit 205 examines whether the private information described in the user certificate satisfies the service providing conditions (for example, whether qualifications specified by the private information satisfy conditions required for accounting (for example, membership of a credit card)). The approval or denial judgment unit 205 sends the authentication unit 204 the judgment result indicating permission or rejection of browsing the Web page depending on whether the service providing conditions are or are not satisfied (S2017).

When the judgment result received from the approval or denial judgment unit 205 indicates rejection of browsing the Web page or when the verification of the signature fails in S2016, then, the authentication unit generates approval or denial information indicating that browsing of the Web page is not permitted, and sends the approval or denial information to the service providing apparatus 30' through the dedicated network IF unit 201. On the other hand, when the judgment result indicates permission to browse the Web page, then, the approval or denial judgment unit 205 generates approval or denial information to that effect, and sends the approval or denial information to the service providing apparatus 30' through the dedicated network IF unit 201 (S2018).

In the service providing apparatus 30', receiving the approval or denial information from the management apparatus 20' through the dedicated network IF unit 303, the approval or denial information acquisition unit 306 sends the approval or denial information to the repeater unit 304.

When the approval or denial information received from the approval or denial information acquisition unit 306 indicates permission to browse the Web page, then, the repeater unit 304 sends the accounting unit 308 the Web page identification information specified by the URL included in the browsing request received in S2010, and the certificate identification information received in S2014 by the certificate identification information acquisition unit 305 from the information terminal 40'. Receiving them, the accounting unit 308 adds 1 to the frequency of using the Web page that is associated with the Web page identification information and the certificate identification information received from the repeater unit 304 in the accounting DB 309. Or, the accounting unit 308 registers anew the certificate identification information of the user and the use frequency "1", in association with the above-mentioned Web page identification information, in the accounting DB 309 (S2019).

Further, when the approval or denial information received from the approval or denial information acquisition unit 306 indicates permission of browsing the Web page, the repeater unit 304 sends the browsing request received in S2010 to the Web server 10' through the Internet IF unit 302. Receiving this, the Web server 10' sends the Web page corresponding to the URL included in the above-mentioned browsing request, to the information terminal 40' through the service providing unit 30', so that the Web page is displayed on the information terminal 40'. On the other hand, when the approval or denial information indicates rejection of browsing the Web page, the repeater unit 304 sends a Web page corresponding to a predetermined URL (for example, a Web page including a message that browsing of the desired Web page is rejected) to the information terminal 40' through the radio IF unit 301, so that the sent Web page is displayed on the information terminal 40' (S2020).

Hereinabove, the second embodiment of the present invention has been described.

Similarly to the above-described first embodiment, also the present embodiment can reduce possibility of outflow of private information itself, which is described in a user certificate. Further, it is possible to confirm that the user of the information terminal 40' is a legitimate user specified by the user certificate corresponding to the certificate identification information.

Further, in the present embodiment, an authentication mark added to a Web page can be used for confirming a relation between the Web page in question and a Web page certified by the authentication mark. Accordingly, from the viewpoint of the user of the information terminal 40', security of using a Web page is improved. In addition, even when, in Fig. 15, the signature verification in S2005 is successful but the coincidence verification in S2006 fails, or, in other words, even when the authentication mark itself is a legitimate one issued by the authentication mark issuer, but there is a good possibility that the authentication mark is used illegally by a third party who does not have a legitimate right of using, advantageously it is possible to move from the authentication mark to the Web page certified by the authentication mark.

Similarly to the above-described first embodiment, also in the present embodiment, the service providing apparatus 30' may be provided with an authentication unit for verification of a signature to certificate identification information, so that verification of a signature added to the certificate identification information is performed in the service providing apparatus 30' instead of the authentication unit 204 of the management apparatus 20'. In that case, the service providing apparatus 30' may acquire the verification key together with the certificate identification information and the signature to the certificate identification information, from the information terminal 40'.

Further, in the above-described embodiment, the service providing apparatus 30' may be provided with an approval or denial judgment unit so that the judgment on approval or denial of browsing a Web page is made in the service providing apparatus 30' instead of the approval or denial judgment unit 205 of the management apparatus 20'. In that case, the service providing condition DB 203 of the management apparatus 20' registers private information items required for judgment on approval or denial of browsing a Web page, in association with the Web page identification information concerned. The service providing apparatus 30' is made to send an information transmission request including certificate identification information and Web page identification information, to the management apparatus 20'. Then, with respect to the private information items registered in the service providing condition DB 203 in association with the Web page identification information included in the above-mentioned information transmission request, the management apparatus 20' extracts those private information items from the user certificate registered in the user certificate DB 202 in association with the certificate identification information included in the above-mentioned information transmission request, and sends the extracted private information items to the service providing apparatus 30'. In this case also, possibility of outflow of private information can be reduced in comparison with the conventional case, since the private information sent to the service providing apparatus 30' is limited to the private information items whose transmission is permitted by the management apparatus 20' (i.e., information items actually required for judgment on Web page browsing).

Further, in the above-described embodiment, the certificate identification information acquisition unit 105 of the service providing apparatus 30' may have the following function. Namely, prior to acquisition of certificate identification information from an information terminal 40', the certificate identification information acquisition unit 105 displays a message asking whether transmission of the certificate identification information is agreed, or, in other words, whether acting as an agency in accounting of charges for using Web pages is agreed, on the display unit 404 of the information terminal 40'. And, only when the user of the information terminal 40' agrees, the certificate identification information is acquired from the information terminal 40'.

Further, in the above-described embodiment, the certificate identification information request (S2012) and the processing related to that request may be omitted. In that case, the service providing apparatus 30' may sends a code and the like for identifying the information terminal 40' to the management apparatus 20', so that the management apparatus 20' judges approval for Web browsing, based on the code. Or, the service providing apparatus 30' may perform accounting (S2019) without making a request to the management apparatus 20' for verification.

Next, a third embodiment of the present invention will be described.

As the third embodiment of the present invention, will be taken an example in which the authentication system of the present invention is applied to a settlement system in which an information terminal is used in a shop or the like.

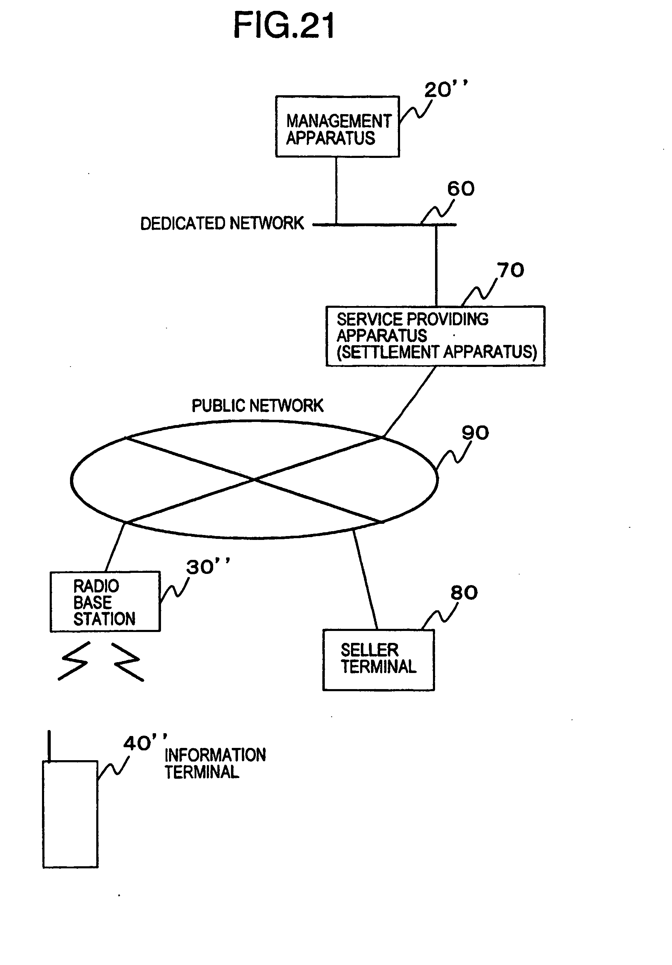

Fig. 21 is a schematic diagram showing an authentication system to which the third embodiment of the present invention is applied. In this figure and Fig. 1 showing the first embodiment, same reference numerals refer to elements having same functions.

In Fig. 21, a seller terminal 80 is an information terminal installed and used, for example, at a cashier of a shop. The seller terminal 80 has a function of communicating with a service providing apparatus (a settlement apparatus) 70 through the public network 90. The service providing apparatus 70 performs settlement between a consumer as a user of an information terminal 40" and a seller as a user of the seller terminal 80. Here, the service providing apparatus 70 manages account information of a consumer, in association with his certificate identification information, and manages account information of a seller, in association with seller identification information. Further, a management apparatus 20" manages a user certificate, giving it certificate identification information, and manages conditions (possession of membership, and the like, and hereinafter referred to as settlement service providing conditions) for receiving the settlement service provided by the service providing apparatus 70, in association with seller identification information. In Fig. 21, the management apparatus 20" is connected to the service providing apparatus 70 through a dedicated network 60. However, the management apparatus 20" and the service providing apparatus 70 may be connected through a public network 90, when a communication technique (such as cipher communication or the like) that can ensure security is employed.

In the above-described configuration, when a consumer purchases a commodity in a shop, a seller sends a seller's side settlement request to the service providing apparatus 70, using his seller terminal 80. The seller's side settlement request includes his seller identification information, transaction amount information indicating an amount of transaction (an amount of a consumer's purchase) with a consumer, and a management number (for example, a serial number) that the seller determined uniquely for managing settlement between the consumer and the seller. On the other hand, the consumer sends a consumer's side settlement request to the service providing apparatus 70, using his information terminal 40". The consumer's side settlement request includes his certificate identification information and the above-mentioned management number notified from the seller. When the seller's side settlement request and the consumer's side settlement request having the same management number make a pair, then, the service providing apparatus 70 first sends the management apparatus 20" a verification request, which includes the certificate identification information included in the consumer's side settlement request and the seller identification information included in the seller's side settlement request.

Receiving the verification request, the management apparatus 20" specifies the user certificate that it manages in association with the certificate identification information included in the verification request, and specifies the settlement service providing conditions that it manages in association with the seller identification information included in the verification request. Then, the management apparatus 20" judges whether the private information described in the specified user certificate satisfies the specified settlement service providing conditions, to determine approval or denial of providing the settlement service, and sends approval or denial information indicating the content of the determination to the service providing apparatus 70.

When the service providing apparatus 70 receives the approval or denial information from the management apparatus 20", and the content of the approval or denial information indicates permission to provide the settlement service, then, the service providing apparatus 70 draws the amount of money indicated by the transaction amount information included in the above-mentioned seller's side settlement request from the consumer's account specified by the account identification information managed in association with the certificate identification information included in the above-mentioned consumer's side settlement request, and transfers the drawn amount of money to the seller's account specified by the account identification information managed in association with the seller identification information included in the above-mentioned seller's side settlement request. Then, the processing result is reported to the information terminal 40" and the seller terminal 80. On the other hand, when the content of the approval or denial information indicates rejection of providing the settlement service, then, the service providing apparatus 70 sends a message to that effect to the information terminal 40" and the seller terminal 80.

Thus, in the present embodiment, a consumer can purchase a commodity at a shop without carrying about money, by using an information terminal 40". Further, in the present embodiment, an information terminal 40" or a seller terminal 80 sends the service providing apparatus 70 certificate identification information as identification information of a user certificate or seller identification information as identification information of a seller. Further, the management apparatus 20" sends the service providing apparatus 70 approval or denial information that indicates approval or denial of providing the settlement service. Namely, a user certificate and private information itself of a seller are not transmitted on the public network 90 and the dedicated network 60. Accordingly, possibility of outflow of a user certificate or private information to a third party can be reduced.

Next, the service providing apparatus 70' as a component of the system shown in Fig. 21 will be described. In the present embodiment, the management apparatus 20" is similar to the management apparatus 20 of the first embodiment shown in Fig. 3, except that the service providing condition DB 203 registers settlement service providing conditions in association with seller identification information. Further, similarly to the first embodiment shown in Fig. 1,a portable terminal such as a portable telephone or a PDA can be used as the information terminal 40". Further, as the seller terminal 80, can be used an information terminal that has a function of communicating with the service providing apparatus 70 through the public network 90. Further, a radio base station 30" is an ordinary radio base station having a function of connecting the information terminal 40" to the public network 90. Thus, description of the management apparatus 20", the information terminal 40", the seller terminal 80 and the radio base station 30" will be omitted.

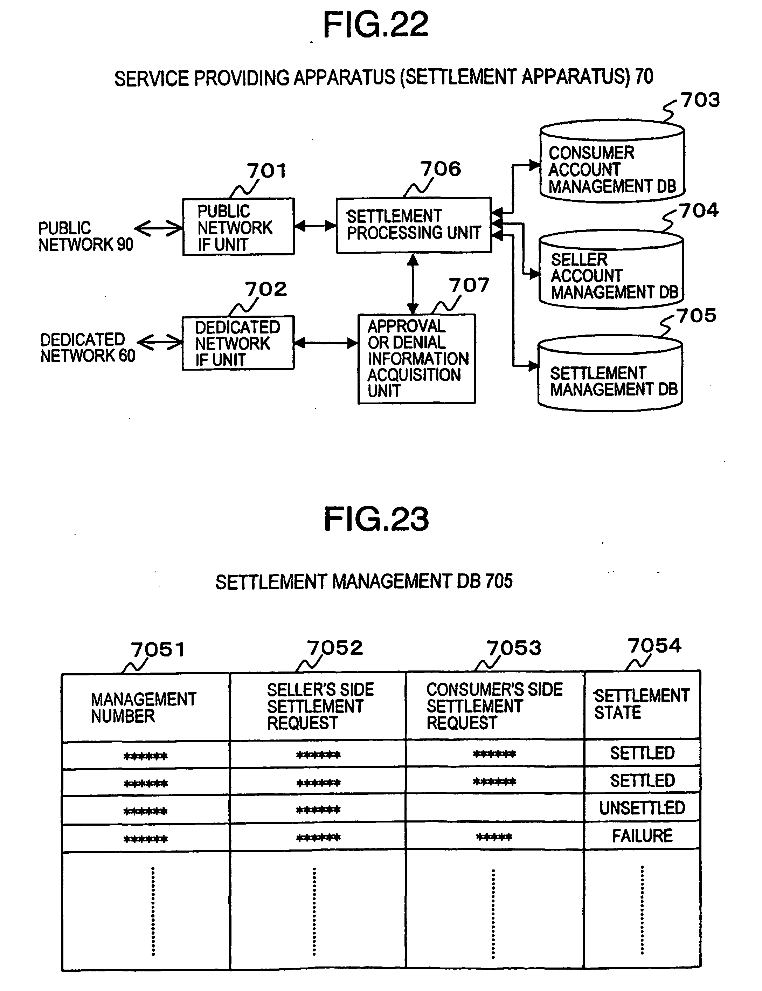

Fig. 22 is a schematic diagram showing the service providing apparatus 70.

In Fig. 22, a public network IF unit 701 is an interface for communicating with an information terminal 40" and a seller terminal 80 through the public network 90.

A dedicated network IF unit 702 is an interface for communicating with the management apparatus 20" through the dedicated network 60.

A consumer account management DB 703 registers account information of a consumer, in association with the certificate identification information of that consumer.

A seller account management DB 704 registers account information of a seller, in association with seller identification information of that seller.

A settlement management DB 705 is a database for management of settlement between a consumer and a seller, and, as shown in Fig. 23, registers a record that has a field 7051 for registering a management number, a field 7052 for registering a seller's side settlement request, a field 7053 for registering a consumer's side settlement request, and a field 7054 for registering a settlement state (settled, unsettled, or failure).

When a settlement processing unit 706 receives a seller's side settlement request from the seller terminal 80 through the public network IF unit 701, then, the settlement processing unit 706 examines whether the settlement management DB 705 has a record in the field 7051 of which the management number included in the seller's side settlement request is registered. When such a record exists (in this case, the consumer's side settlement request and the "unsettled" state are registered into the fields 7053 and 7054, respectively), the settlement processing unit 706 registers the above-mentioned seller's side settlement request into the filed 7052 of this record. And, the below-mentioned settlement is performed. When such a record does not exist, then, the settlement processing unit 706 adds a new record, and registers the above-mentioned management number, the above-mentioned seller's side settlement request and the "unsettled" state into the fields 7051, 7052 and 7054 of this record, respectively.

When the settlement processing unit 706 receives the consumer's side settlement request from the seller terminal 80 through the public network IF unit 701, the settlement processing unit 706 examines whether the settlement DB 705 has a record in the field 7051 of which the management number included in the consumer's settlement request is registered. When there exists such a record (in this case, the seller's side settlement request and the "unsettled" state are registered into the fields 7052 and 7054, respectively), then, the settlement processing unit 706 registers the above-mentioned consumer's side settlement request into the field 7053 of this record, and performs the below-mentioned settlement processing. When there does not exist such a record, the settlement processing unit 706 adds a new record and registers the above-mentioned management number, the above-mentioned consumer's side settlement request, and the "unsettled" state into the fields 7051, 7053 and 7054 of the record, respectively.

Further, the settlement processing unit 706 performs the following settlement processing on the record in the fields 7051, 7052 and 7054 of which the management number, the seller's side settlement request and the consumer's side settlement request, are registered respectively and in the filed 7055 of which the "unsettled" state is registered in the settlement DB 705.

Namely, the settlement processing unit 706 sends the approval or denial information acquisition unit 707 the seller identification information included in the seller's side settlement request registered in the field 7052 of the record and the certificate identification information added with the signature included in the consumer's side settlement request, to receive approval or denial information from the approval or denial information acquisition unit 707. When the approval or denial information indicates permission to provided the settlement service, then the settlement processing unit 706 draws the amount of money indicated by the transaction amount information included in the above-mentioned seller's side settlement request from the account specified by the account identification information registered in the consumer account management DB 703 in association with the certificate identification information included in the above-mentioned consumer's side settlement request, and transfers the drawn amount to the seller's account specified by the account identification information registered in the seller account management DB 704 in association with the seller identification information included in the above-mentioned seller's side settlement request. Then, the processing result is reported to the information terminal 40" and the seller terminal 80 through the public network IF unit 701, and the settlement processing unit 706 updates the settlement state registered in the field 7054 of the record (in this case, into "settled" or "failure"). On the other hand, when the approval or denial information indicate rejection of providing the settlement service, then, the settlement processing unit 706 sends a message to that effect to the information terminal 40" and the seller terminal 80 through the public network IF unit 701, and updates the settlement state registered in the field 7054 of the record (in this case, into "failure").

When the approval or denial information acquisition unit 707 receives the seller identification information and the certificate identification information added with the signature from the settlement processing unit 706, then, the approval or denial information acquisition unit 707 generates a settlement request including them and sends the settlement request to the management apparatus 20" through the dedicated network IF unit 702. And, the approval or denial information acquisition unit 707 receives approval or denial information from the management apparatus 20" as a response to the verification request, and sends the received approval or denial information to the settlement processing unit 706.

Similarly to the service providing apparatus 10 of the first embodiment, also the service providing apparatus 70 having the above-described configuration may be implemented, for example, by a computer system having a configuration such as shown in Fig. 7 or by a network system comprising a plurality of such computer systems connected with one another through a network.

Next, operation of the authentication system of the above-described configuration will be described.

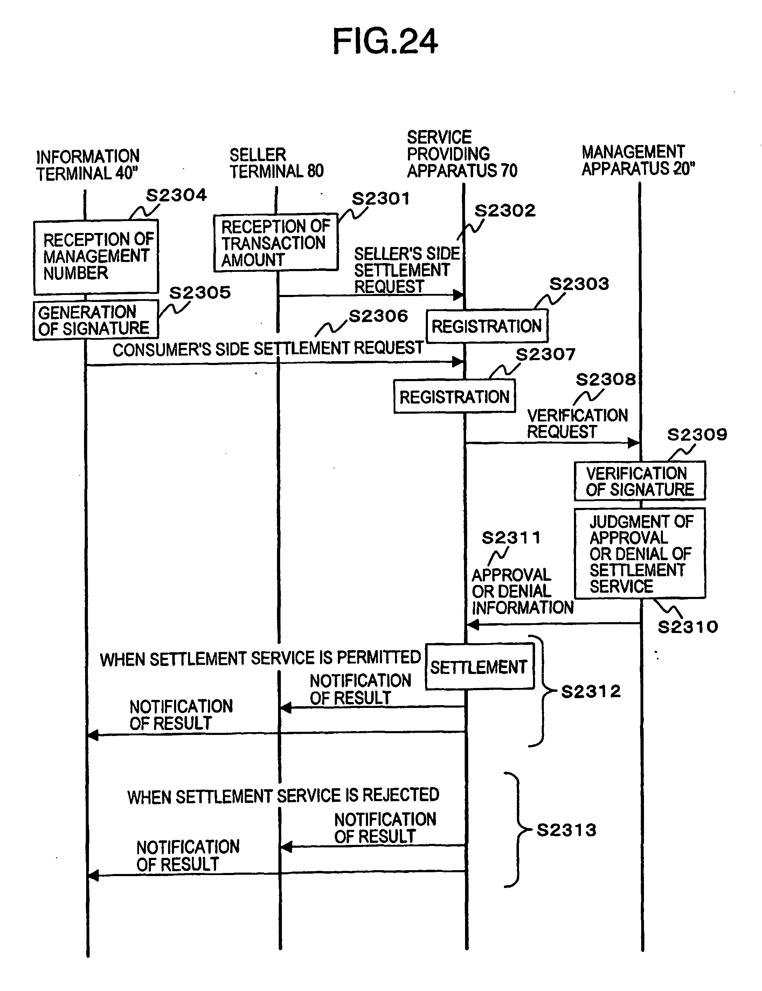

Fig. 24 is a diagram for explaining an operating procedure of the authentication system shown in Fig. 21.

When a consumer demands purchase of a commodity from a seller, the seller notifies the consumer of the amount of money to pay for the commodity and a unique management number generated by using a seller terminal 80 or the like. At the same time, the seller inputs transaction amount information, which indicates the amount of money to pay for the commodity, into the seller terminal 80 (S2301). Receiving the input, the seller terminal 80 generates a seller's side settlement request including the above-mentioned transaction amount information, the above-mentioned management number, and the seller identification information (which is registered in advance) of the seller, and sends the generated seller's side settlement request to the service providing apparatus 70 (S2302).

In the service providing apparatus 70, when the settlement processing unit 706 receives the seller's side settlement request from the seller terminal 80 through the public network IF unit 701, the settlement processing unit 706 examines whether the settlement DB 705 registers a record whose field 7051 registers the management number included in the seller's side settlement request. When it is confirmed that such a record is not registered, the settlement processing unit 706 adds a new record to the settlement DB 705, and registers the above-mentioned management number, the above-mentioned seller's side settlement request, and the settlement state of "unsettled" into the fields 7051, 7052 and 7054 of the new record (S2303).

On the other hand, the consumer inputs the management number, which has been notified by the seller, into his information terminal 40" (S2304). Receiving the input, the information terminal 40" generates a signature to the consumer's certificate identification information (which has been registered in advance) using a signature key (which also has been registered in advance) (S2305). Then, the information terminal 40" generates a consumer's side settlement request including the above-mentioned management number and the certificate identification information added with the above-mentioned signature, and sends the generated request to the service providing apparatus 70 (S2306).

In the service providing apparatus 70, when the settlement processing unit 706 receives the consumer's side settlement request from the information terminal 40" through the public network IF unit 701, then, the settlement processing unit 706 examines whether the settlement DB 705 has a record in the field 7051 of which the management number included in the consumer's side settlement request is registered. When it is confirmed that such a record is registered, then, the settlement processing unit 706 registers the above-mentioned consumer's side settlement request into the field 7053 of the record (S2307). Now, the record in question (hereinafter, referred to as the object record) registers all the information required for settlement.

Then, the settlement processing unit 706 sends the approval or denial information acquisition unit 707 the seller identification information (which is included in the seller's side settlement request registered in the field 7052 of the object record) and the certificate identification information added with the signature (which is included in the consumer's side settlement request registered in the field 7053). Receiving them, the approval or denial information acquisition unit 707 generates a verification request including the above-mentioned seller identification information and the above-mentioned certificate identification information added with the signature, and sends the generated verification request to the management apparatus 20" through the dedicated network IF unit 702 (S2308).

In the management apparatus 20", when the authentication unit 204 receives the verification request from the service providing apparatus 70 through the dedicated network IF unit 201, then, the authentication unit 204 reads the verification key registered in the user certificate DB 202 in association with the certificate identification information included in the verification request. Then, using the verification key, the authentication unit 204 verifies the signature to the certificate identification information, which is included in the verification request (S2309). When the verification of the signature is successful, the authentication unit 204 sends the certificate identification information and the seller identification information included in the verification request to the approval or denial judgment unit 205.

Receiving them, the approval or denial judgment unit 205 reads the user certificate registered in association with the certificate identification information in the user certificate DB 202, and the settlement service providing conditions registered in association with the seller identification information in the service providing condition DB 203. Then, the approval or denial judgment unit 205 examines whether the private information described in the user certificate satisfies the settlement service providing conditions (for example, whether the consumer is a member who can receive the settlement service). The approval or denial judgment unit 205 sends the authentication unit 204 the judgment result to the effect that enjoyment of the settlement service is permitted or rejected, depending on whether the settlement service providing conditions are satisfied, or are not satisfied (S2310).

When the judgment result received from the approval or denial judgment unit 205 indicates rejection of providing the settlement service, or when the signature verification in S2309 fails, then, the authentication unit 204 generates approval or denial information indicating rejection of providing the settlement service and sends the generated approval or denial information to the service providing apparatus 70 through the dedicated network IF unit 201. On the other hand, when the judgment result received from the approval or denial judgment unit 205 indicates permission to provide the settlement service, then, the authentication unit 204 generates approval or denial information to that effect, and sends the approval or denial information to the service providing apparatus 70 through the dedicated network IF unit 201 (S2311).

In the service providing apparatus 70, when the approval or denial information acquisition unit 707 receives the approval or denial information from the management apparatus 20" through the dedicated network IF unit 702, then, the approval or denial information acquisition unit 707 sends it to the settlement processing unit 706. When the approval or denial information received from the approval or denial information acquisition unit 707 indicates permission to provide the settlement service, the settlement processing unit 706 draws the amount of money indicated by the transaction amount information included in the seller's side settlement request registered in the field 7052 of the object record from the account specified by the account identification information registered in the consumer account management DB 703 in association with the certificate identification information included in the consumer's side settlement request registered in the field 7053 of the object record. Then, the settlement processing unit 706 transfers the drawn amount to the seller's account specified by the account identification information registered in the seller account management DB 704 in association with the seller identification information included in the above-mentioned seller's side settlement request, and updates the settlement state registered in the field 7054 of the object record. Then, the settlement processing unit 706 reports the processing result to the information terminal 40" and the seller terminal 80 through the public network IF unit 701 (S2312).

On the other hand, when the approval or denial information received from the approval or denial information acquisition unit 707 indicates rejection of providing the settlement service, then, the settlement processing unit 706 sends a message to that effect to the information terminal 40" and the seller terminal 80 through the public network IF unit 701, and, at the same time, updates the settlement state registered in the field 7054 of the object record (S2313).

When it is confirmed that the settlement has normally finished, from the message received from the service providing apparatus 70 through the seller terminal 80, the seller delivers the commodity to the consumer.

Hereinabove, the third embodiment of the present invention has been described.

According to the present embodiment, a consumer can use an information terminal 40" to purchase a commodity at a shop, without carrying about money. Further, in the present embodiment, the information terminal 40" or the seller terminal 80 sends certificate identification information of a user certificate and seller identification information of a seller, to the service providing apparatus 70. Further, the management apparatus 20" sends the service providing apparatus 70 approval or denial information, which indicates approval or denial of providing the settlement service. Thus, a user certificate and private information itself are not transmitted on the public network 90 and the dedicated network 60. Accordingly, possibility of outflow of a user certificate or private information to a third party can be reduced.

In the above embodiment, the service providing apparatus 70 may be provided with an authentication unit for verification of a signature, so that verification of a signature added to certificate identification information is performed in the service providing apparatus 70 instead of the authentication unit 204 of the management apparatus 20". In that case, the service providing apparatus 70 may acquire a verification key together with a signature to the certificate identification information, from the information terminal 40".

Further, in the above embodiment, the service providing apparatus 70 may be provided with an approval or denial judgment unit, so that the judgment of approval or denial of providing the settlement service is performed in the service providing apparatus 70 instead of the approval or denial judgment unit 205 of the management apparatus 20". In that case, the service providing condition DB 203 of the management apparatus 20" registers private information items required for judgment on approval or denial of providing the settlement service, in association with seller identification information concerned. The service providing apparatus 70 sends the management apparatus 20" an information transmission request including certificate identification information and seller identification information. Then, with respect to the private information items registered in the service providing condition DB 203 in association with the seller identification information included in the above-mentioned information transmission request, the management apparatus 20" extracts those private information items from the user certificate registered in the user certificate DB 202 in association with the certificate identification information included in the above-mentioned information transmission request. The management apparatus 20" sends the extracted private information items to the service providing apparatus 70. In this arrangement also, possibility of outflow of private information can be reduced in comparison with the conventional case, since the private information sent to the service providing apparatus 70 is limited to the private information items whose transmission is permitted by the management apparatus 20" (i.e., information items actually required for judgment on providing the settlement service).

Further, in the above-described embodiment, the transaction amount information is sent to the service providing apparatus 70, being included only in the seller's side settlement request sent from the seller terminal 80. However, the transaction amount may be sent to the service providing apparatus 70, being included also in the consumer's side settlement request sent from the information terminal 40", so that the service providing apparatus 70 examines whether the transaction amount information included in the seller's side settlement request coincides with the transaction amount information included in the consumer's side settlement request.

Further, in the above-described embodiment, the service providing apparatus 70 sends the result of the settlement service, to both the seller terminal 80 and information terminal 40". However, the result of the settlement service may be sent to the seller terminal 80 only. Then, the seller may show the display screen or the like of the seller terminal 80 to the consumer as the user of the terminal 40", in order to inform the consumer of the result of the settlement service.

Further, the above-described embodiment may be modified such that settlement is performed when the information terminal 40" sends a seller's side settlement request to the service providing apparatus 70.

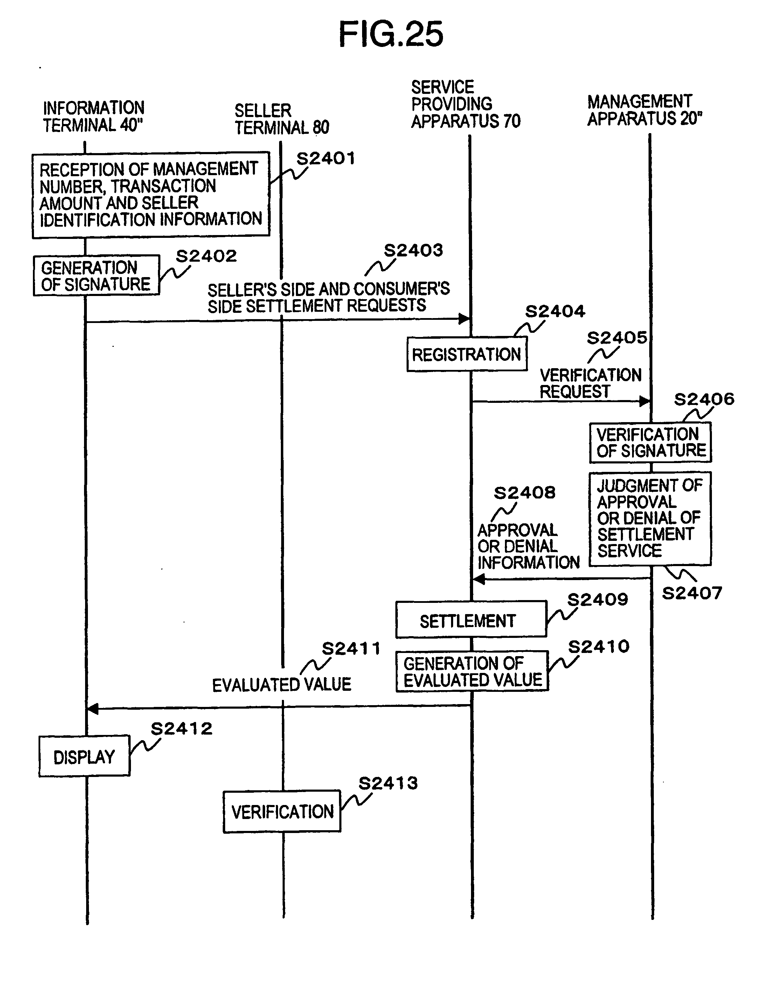

Fig. 25 is a diagram for explaining a variant of the operating procedure of the authentication system shown in Fig. 21.

When a consumer demands purchase of a commodity from a seller, the seller notifies the consumer of the seller identification information, the amount of money to pay for the commodity and a unique management number generated by using a seller terminal 80 or the like. The consumer inputs the management number, the amount of money to pay for the commodity and the seller identification information notified from the seller, into his information terminal 40" (S2401). Receiving the input, the information terminal 40" generates a signature to the certificate identification information registered in advance, using the signature key registered in advance (S2402). Then, the information terminal 40" generates a consumer's side settlement request including the above-mentioned management number and the certificate identification information added with the above-mentioned signature, generates a seller's side settlement request including the above-mentioned management number, above-mentioned transaction amount information and the above-mentioned seller identification information, and sends those requests to the service providing apparatus 70 (S2403).

In the service providing apparatus 70, the settlement processing unit 706 receives the consumer's side settlement request and the seller's side settlement request from the information terminal 40" through the public network IF unit 701, then, the settlement processing unit 706 adds a new record to the settlement DB 705, and registers the management number, the above-mentioned seller's side settlement request and the above-mentioned consumer's side settlement request included in those settlement requests into the fields 7051 - 7053 of the new record. Further, the settlement processing unit 706 registers the settlement state "unsettled" into the field 7054 of the record (S2404). Thus, all the information required for settlement has been registered into the record (hereinafter, referred to as the object record).

Then, the settlement processing unit 706 sends the approval or denial information acquisition unit 707 the seller identification information (which is included in the seller's side settlement request registered in the field 7052 of the object record) and the certificate identification information added with the signature (which is included in the consumer's side settlement request registered in the field 7053). Receiving them, the approval or denial information acquisition unit 707 generates a verification request including the above-mentioned seller identification information and the above-mentioned certificate identification information added with the signature, and sends the generated verification request to the management apparatus 20" through the dedicated network IF unit 702 (S2405).

Then, the apparatus 20" performs processing similar to the S2309 and S2310 of Fig. 24, and approval or denial information is sent to the service providing apparatus 70 (S2406 - S2408).

In the service providing apparatus 70, when the approval or denial information acquisition unit 707 receives the approval or denial information from the management apparatus 20" through the dedicated network IF unit 702, then, the approval or denial information acquisition unit 707 sends the approval or denial information to the settlement processing unit 706. When the approval or denial information received from the approval or denial information acquisition unit 707 indicates permission to provide the settlement service, then, the settlement processing unit 706 draws the amount of money indicated by the transaction amount information included in the seller's side settlement request registered in the field 7052 of the object record, from the account specified by the account identification information registered in the consumer account management DB 703 in association with the certificate identification information included in the consumer's side settlement request registered in the field 7053 of the object record. Then, the settlement processing unit 706 transfers the drawn amount into the seller's account specified by the account identification information registered in the seller account management DB 704 in association with the seller identification information included in the above-mentioned seller's side settlement request, and updates the settlement state registered in the field 7054 of the object record (S2409).

Then, the settlement processing unit 706 generates payment confirmation information according to predetermined rules, using the information of the seller's side settlement request registered in the field 7052 of the object record. For example, the settlement processing unit 706 generates the payment confirmation information, by connecting the management number, the seller identification information and the transaction amount information. Then, using a key for evaluated value, which is registered in advance, the settlement processing unit 706 generates an evaluated value (for example, a hash value) to the payment confirmation information (S2410), and sends the evaluated value to the information terminal 40" through the public network IF unit 701 (S2411).

Receiving the evaluated value from the service providing apparatus 70, the information terminal 40" displays the evaluated value on the display unit (S2412). The consumer presents the displayed content to the seller. Receiving this and using the seller terminal 80, the seller generates payment confirmation information from the management number, the seller identification information and the transaction amount information, according to the same rules as ones employed by the settlement processing unit 706 of the service providing apparatus 70. Then, using the key for evaluated value (the same key as the above-mentioned key for evaluated value, which is registered in the service providing apparatus 70 in association with the seller identification information of the seller), which is registered in advance, the evaluated value to the payment confirmation information is generated, and it is examined whether this evaluated value coincides with the evaluated value received from the service providing apparatus 70 (S2413). After the coincidence is confirmed, the commodity is delivered to the consumer.

Here, in S2410 and S2411, instead of generating the evaluated value, the settlement processing unit 706 may generate a signature to the payment confirmation information, using a signature key of the user of the service providing apparatus 70, and send the signature and the payment confirmation information to the information terminal 40", to make the information terminal 40" display the signature. Then, in S2413, an optical reader optically reads the signature and the payment confirmation information displayed on the information terminal 40", to take them into the seller terminal 80. Then, the seller terminal verifies the signature, using the verification key (which is registered in advance) of the user of the service providing apparatus 70.

Hereinabove, various embodiments of the present invention have been described.

The present invention is not limited to the above-described embodiments, and various variations can be obtained within the scope of the invention as defined by the claims.

For example, although the above-described embodiment supposes that a portable terminal is used as the information terminal, the present invention is not limited to this. For example, in the cases of the above-described first and second embodiments, a fixed-type information terminal may be employed. Further, in the above-described embodiments, a signature to the certificate identification information and verification of the signature are not indispensable.

Further, the authentication system of the present invention can be widely applied to various service systems (systems of the type where a service providing apparatus provides service to an information terminal or a user of an information terminal) other than the service providing systems described in the above embodiments.

As described above, according to the present invention, it is possible to reduce possibility of outflow of private information in authentication of a user of an information terminal.

## Claims

1. An authentication system comprising a management apparatus (20) that manages private information and a service providing apparatus (10) that provides service to an information terminal (40), and that is coupled to said management apparatus (20) via a dedicated network (60) and to said information terminal (40) via a public network (50), **characterized in that**
said management apparatus (20) comprises:
a private information database (202) in which private information (2022) is registered, associating the private information with personal identification information (2021) which does not include private information;
a personal identification information acquisition processing unit (204) that receives said personal identification information (2021) from said service providing apparatus (10) via said dedicated network (60);
a providing condition database (203) in which service identification information (2031) that identifies the service provided by said service providing apparatus (10) and service providing conditions (2032) required for providing the service are registered;
a determination processing unit (205) that reads the private information (2022) associated with said personal identification information (2021) received from said service providing apparatus (10), from said private information database (202), that reads the service providing conditions (2032) associated with the service identification information (2031) sent from said service providing apparatus (10), from said providing condition database (203), that makes a judgement on whether said private information (2022) satisfies the service providing conditions (2032), and that determines approval or denial of providing the service depending on a result of the judgement; and
a notification processing unit that notifies said service providing apparatus (10) of approval or denial information indicating the judgement result of said determination processing unit (205) via said dedicated network (60), and
said service providing apparatus (10) comprises:
a personal identification information acquisition processing unit (105) that acquires personal identification information (2021) from said information terminal (40) via said public network (50);
an approval or denial information acquisition processing unit (106) that sends said personal identification information (2021) and said service identification information (2031) acquired by said personal identification information acquisition processing unit (105) to said management apparatus (20) via said dedicated network (60), to acquire said approval or denial information from said management apparatus (20); and
a service providing processing unit (104) that provides the service to said information terminal (40) when said approval or denial information acquired by said approval or denial information acquisition processing unit (106) indicates permission to provide the service.

2. The authentication system according to Claim 1, wherein:
said private information database of said management apparatus, in which the private information together with a public key certificate is registered, associates said private information and said public key certificate with the personal identification information;
said determination processing unit of said management apparatus verifies signature information added to the personal identification information sent from said service providing apparatus, using the public key certificate registered in association with said personal identification information in said private information database; performs said judgment when the verification is successful; determines approval or denial of providing the service depending on the result of the judgment; and, on the other hand, determines rejection of providing the service when the verification fails;
said personal identification information acquisition processing unit of said service providing apparatus acquires the personal identification information added with the signature information, from said information terminal; and
said approval or denial information acquisition processing unit of said service providing apparatus sends said management apparatus the personal identification information added with the signature information, which is acquired by said personal identification information acquisition processing unit, to acquire the approval or denial information from said management apparatus.

3. The authentication system according to Claim 2, wherein:
said information terminal has a function as a Web browser;
said service providing apparatus has a function as a Web server;
said service providing processing unit of said service providing apparatus permits said information terminal to browse a certain Web page, when the approval or denial information acquired by said approval or denial information acquisition processing unit indicates permission to provide the service.

4. The authentication system according to Claim 2, wherein:
said information terminal has a function as a Web browser;
said service providing apparatus has a network connecting function for connecting said information terminal to Web server through a network; and
said service providing processing unit of said service providing apparatus permits said information terminal to browse a certain Web page provided by said Web server, when the approval or denial information acquired by said approval or denial information acquisition processing unit indicates permission to provide the service.

5. The authentication system according to Claim 4, wherein:
said certain Web page is a pay content;
said service providing processing unit of said service providing apparatus performs accounting for use of said certain Web page by said information terminal that is permitted to browse said certain Web page.

6. The authentication system according to Claim 5, wherein:
said Web server, holding said certain Web page, holds a Web page including image information to which said certain Web page is set, in a state that said information terminal can browse said Web page including the image information.

7. The authentication system according to Claim 6, wherein:
said image information is set with a link, such that a select action of said image information of an operator of said information terminal causes the identification information of said certain Web page is sent together with identification information of said Web page including the image information under browsing by said information terminal, from said information terminal to said service providing apparatus;
said service providing apparatus further comprises:
a relation information acquisition processing unit that sends said management apparatus the identification information of said certain Web page and the identification information of said Web page including the image information; acquires information on a relation between said certain Web page and said Web page including the image information; and sends the acquired information to said information terminal; and
said management apparatus further comprises:
a Web page identification information database, in which the identification information of said certain Web page is registered, associating said identification information with the identification information of said Web page including the image information to which said identification information of said certain Web page is set; and
a verification processing unit that verifies the relation between said certain Web page and said Web page including the image information, by examining whether the identification information of said certain Web page and the identification information of said Web page including the image information (both sent from said service providing apparatus) are registered in association with each other in said Web page identification information database; and notifies said service providing apparatus of a result of verification.

8. The authentication system according to Claim 2, wherein:
said service providing apparatus further comprises:
a settlement request acquisition processing unit that receives a settlement request (which includes seller identification information, transaction amount information and a management identification information) from a seller terminal;
a consumer account management database in which an account is registered, associating the account with personal identification information; and
a seller account management database in which an account is registered, associating the account with seller identification information;
said personal identification information acquisition processing unit of said service providing apparatus acquires the personal identification information together with management identification information from said information terminal; and
when the approval or denial information acquired by said approval or denial information acquisition processing unit indicates permission to provide the service, then,
with respect to a settlement request that is acquired by said settlement request acquisition processing unit and that includes the management identification information acquired together with said personal identification information by said personal identification information acquisition processing unit,
said service providing processing unit of said service providing apparatus draws an amount of money indicated by the transaction amount information included in said settlement request, from an account registered in said consumer account management database in association with the personal identification information acquired by said personal identification information acquisition processing unit; transfers the drawn amount of money to an account registered in said seller account management database in association with the seller identification information included in said settlement request; and notifies said seller terminal of a transfer result.

9. The authentication system according to Claim 2, wherein:
said service providing apparatus further comprises: a consumer account management database in which an account is registered, associating the account with personal identification information; and a seller account management database in which an account is registered, associating the account with seller identification information;
said personal identification information acquisition processing unit of said service providing apparatus acquires a settlement request that includes the personal identification information, seller identification information and transaction amount information, from said information terminal;
and
when the approval or denial information acquired by said approval or denial information acquisition processing unit indicates permission to provide the service,
then,
said service providing processing unit of said service providing apparatus draws an amount of money indicated by the transaction amount information included in the settlement request acquired by said personal information acquisition processing unit, from an account registered in said consumer account management database in association with the personal identification information included in said settlement request; transfers the drawn amount of money to an account registered in said seller account management database in association with the seller identification included in said settlement information; and notifies said information terminal of a transfer result.

10. A method of authentication, in which authentication of an information terminal (40) to which service can be provided is performed using an authentication system comprising a management apparatus (20) that manages private information and a service providing apparatus (10) that is coupled to said management apparatus (20) via a dedicated network (60) and to said information terminal (40) via a public network (50), and that provides the service to said information terminal (40), **characterized in that** said method comprises:
a first step in which said service providing apparatus (10) acquires personal identification information (2021) that does not include private information from said information terminal (40) via said public network (50);
a second step in which said personal identification information (2021) is sent to said management apparatus (20) together with service identification information (2031) via said dedicated network (60);
a third step in which said management apparatus (20) judges whether private information (2022) that said management apparatus (20) manages in association with the personal identification information (2021) received from said service providing apparatus (10) satisfies predetermined service providing conditions (2032) that are managed in association with said service identification information (2031), and determines approval or denial of providing the service depending on a result of judgement;
a fourth step in which said management apparatus (20) sends approval or denial information, which indicates a content of the determination of approval or denial of providing the service, to said service providing apparatus (10) via said dedicated network (60); and
a fifth step in which said service providing apparatus (10) provides the service to said information terminal (40) via said public network (50), when the approval or denial information sent from said management apparatus (20) indicates permission to provide the service.

11. The method of authentication according to Claim 10, wherein:
said information terminal has a function as a Web browser;
said service providing apparatus has a function as a Web server; and
in said fourth step, a certain Web page is provided to said information terminal, when the approval or denial information sent from said management apparatus indicates permission to provide the service.

12. The method of authentication according to Claim 10, wherein:
said information terminal has a function as a Web browser;
said service providing apparatus has a network connecting function for connecting said information terminal to a Web server through a network; and
in said fourth step, said information terminal is enabled to browse a certain Web page provided by said Web server, when the approval or denial information sent from said management apparatus indicates permission to provide the service.

13. The method of authentication according to Claim 12, wherein:
said certain Web page is a pay content; and
said method further comprises:
a sixth step in which said service providing apparatus performs accounting for use of said certain Web page by said information terminal that is permitted to browse said certain Web page.

14. The method of authentication according to Claim 10, wherein:
said method further comprises:
a sixth step in which said service providing apparatus receives a settlement request (which includes seller identification information, transaction amount information and management identification information) from a seller terminal, prior to said first step;
in said first step, personal identification information is received together with the management identification information from said information terminal;
in said fourth step, when the approval or denial information received from said management apparatus indicates permission to provide the service, then, an amount of money indicated by the transaction amount information included in the settlement request that is received from said seller terminal and that includes the management identification information acquired together with the personal identification information from said information terminal is drawn from an account managed in association with the personal identification information acquired from said information terminal; said amount of money is transferred to an account managed in association with the seller identification information included in said settlement request; and a result of transfer is notified to said seller terminal.

15. The authentication method according to Claim 10, wherein:
in said first step, a settlement request, which includes personal identification information, seller identification information and transaction amount information, is acquired from said information terminal;
in said fourth step, when the approval or denial information acquired from said management apparatus indicates permission to provide the service, then, an amount of money indicated by the transaction amount information included in the settlement request that is acquired from said information terminal is drawn from an account managed in association with the personal identification information included in said settlement request; said amount of money is transferred to an account managed in association with the seller identification information included in said settlement request; and a result of transfer is notified to said information terminal.

## Patentansprüche

1. Authentifizierungssystem mit einer Verwaltungsvorrichtung (20), die private Informationen verwaltet, und einer Servicebereitstellvorrichtung (10), die einem Informationsterminal (40) einen Service bereitstellt und die über ein Privatnetz (60) an die Verwaltungsvorrichtung (20) und über ein öffentliches Netz (50) an das Informationsterminal (40) angeschlossen ist, **dadurch gekennzeichnet, daß**
die Verwaltungsvorrichtung (20) aufweist:
eine Privatinformationsdatenbank (202), in der private Informationen (2022) registriert sind, wobei die privaten Informationen einer persönlichen Identifikationsinformation (2021) zugeordnet sind, die keine privaten Informationen enthält,
eine Verarbeitungseinheit (204) zum Beschaffen persönlicher Identifikationsinformation, die die persönliche Identifikationsinformation (2021) über das Privatnetz (60) von der Servicebereitstellvorrichtung (10) empfängt,
eine Bereitstellbedingungsdatenbank (203), in der Serviceidentifikationsinformation (2031) registriert ist, die den durch die Servicebereitstellvorrichtung (10) bereitgestellten Service identifiziert, und Servicebereitstellbedingungen (2032), die zum Bereitstellen des Services erforderlich sind,
eine Bestimmungsverarbeitungseinheit (205), die die privaten Informationen (2022), die der von der Servicebereitstellvorrichtung (10) empfangenen persönlichen Identifikationsinformation (2021) zugeordnet sind, aus der Privatinformationsdatenbank (202) liest, die die Servicebereitstellbedingungen (2032), die der von der Servicebereitstellvorrichtung (10) gesendeten Serviceidentifikationsinformation (2031) zugeordnet sind, aus der Bereitstellbedingungsdatenbank (203) liest, die eine Entscheidung darüber trifft, ob die privaten Informationen (2022) die Servicebereitstellbedingungen (2032) erfüllen, und die abhängig von dem Beurteilungsergebnis bestimmt, ob der Service gewährt oder verweigert wird, und
eine Mitteilungsverarbeitungseinheit, die der Servicebereitstellvorrichtung (10) über das Privatnetz (60) Gewährungs- oder Verweigerungsinformation mitteilt, die das Beurteilungsergebnis der Bestimmungsverarbeitungseinheit (205) anzeigt, und
die Servicebereitstellvorrichtung (10) aufweist:
eine Verarbeitungseinheit (105) zum Beschaffen persönlicher Identifikationsinformation (2021) über das öffentliche Netz (50) von dem Informationsterminal (40),
eine Verarbeitungseinheit (106) zum Beschaffen von Gewährungs- oder Verweigerungsinformation, die die persönliche Identifikationsinformation (2021) und die Serviceidentifikationsinformation (2031), die von der Verarbeitungseinheit (105) zur Beschaffung der persönlichen Identifikationsinformation beschafft wurden, über das Privatnetz (60) an die Verwaltungsvorrichtung (20) sendet, um die Gewährungs- oder Verweigerungsinformation von der Verwaltungsvorrichtung (20) zu beschaffen, und
eine Servicebereitstell-Verarbeitungseinheit (104), die dem Informationsterminal (40) den Service bereitstellt, wenn die von der Verarbeitungseinheit (106) zur Beschaffung von Gewährungs- oder Verweigerungsinformation beschaffte Gewährungs- oder Verweigerungsinformation die Erlaubnis zum Bereitstellen des Services anzeigt.

2. Authentifizierungssystem nach Anspruch 1, wobei
die Privatinformationsdatenbank der Verwaltungsvorrichtung, in der die privaten Informationen zusammen mit einem öffentlichen Schlüsselzertifikat registriert sind, die privaten Informationen und das öffentliche Schlüsselzertifikat der persönlichen Identifikationsinformation zuordnet,
die Bestimmungsverarbeitungseinheit der Verwaltungsvorrichtung Signaturinformation verifiziert, die zu der von der Servicebereitstellvorrichtung gesendeten persönlichen Identifikationsinformation hinzugefügt ist, indem sie das öffentliche Schlüsselzertifikat verwendet, das in der Privatinformationsdatenbank unter Zuordnung zu der persönlichen Identifikationsinformation registriert ist; die Beurteilung durchführt, wenn die Verifikation erfolgreich ist; die Gewährung oder die Verweigerung der Bereitstellung des Services abhängig von dem Ergebnis der Beurteilung bestimmt; und andernfalls die Zurückweisung der Bereitstellung des Services bestimmt, wenn die Verifikation fehlschlägt,
die Verarbeitungseinheit der Servicebereitstellvorrichtung zur Beschaffung der persönlichen Identifikationsinformation sich die persönliche Identifikationsinformation, zu der die Signaturinformation hinzugefügt wurde, von dem Informationsterminal beschafft, und
die Verarbeitungseinheit der Servicebereitstellvorrichtung zur Beschaffung der Gewährungs- oder Verweigerungsinformation der Verwaltungsvorrichtung die persönliche Identifikationsinformation sendet, zu der die Signaturinformation hinzugefügt wurde, die durch die Verarbeitungseinheit zur Beschaffung der persönlichen Identifikationsinformation beschafft wurde, um die Gewährungs- oder Verweigerungsinformation von der Verwaltungsvorrichtung zu beschaffen.

3. Authentifizierungssystem nach Anspruch 2, wobei
das Informationsterminal eine Funktionsweise als Webbrowser aufweist,
die Servicebereitstellvorrichtung eine Funktionsweise als Webserver aufweist,
die Servicebereitstell-Verarbeitungseinheit der Servicebereitstellvorrichtung dem Informationsterminal erlaubt, eine bestimmte Webseite zu lesen, wenn die durch die Verarbeitungseinheit zur Beschaffung der Gewährungs- oder Verweigerungsinformation beschaffte Gewährungs- oder Verweigerungsinformation die Erlaubnis zur Bereitstellung des Services anzeigt.

4. Authentifizierungssystem nach Anspruch 2, wobei
das Informationsterminal eine Funktionsweise als Webbrowser aufweist,
die Servicebereitstellvorrichtung eine Netzverbindungsfunktion zum Verbinden des Informationsterminals über ein Netzwerk mit dem Webserver aufweist, und
die Servicebereitstell-Verarbeitungseinheit der Servicebereitstellvorrichtung dem Informationsterminal erlaubt, eine bestimmte, durch den Webserver bereitgestellte Webseite zu lesen, wenn die durch die Verarbeitungseinheit zur Beschaffung der Gewährungs- oder Verweigerungsinformation beschaffte Gewährungs- oder Verweigerungsinformation die Erlaubnis zum Bereitstellen des Services anzeigt.

5. Authentifizierungssystem nach Anspruch 4, wobei
die bestimmte Webseite einen Zahlungsinhalt aufweist,
die Servicebereitstell-Verarbeitungseinheit der Servicebereitstellvorrichtung eine Abrechnung über die Nutzung der bestimmten Webseite durch das Informationsterminal durchführt, das zum Lesen der bestimmten Webseite ermächtigt ist.

6. Authentifizierungssystem nach Anspruch 5, wobei
der die Webseite enthaltende Webserver eine Webseite aufweist, die Bildinformation enthält, auf die die bestimmte Webseite derart eingestellt ist, daß das Informationsterminal die die Bildinformation enthaltende Webseite lesen kann.

7. Authentifizierungssystem nach Anspruch 6, wobei
die Bildinformation mit einem Link versehen ist, so daß eine Auswahlaktion der Bildinformation durch einen Betreiber des Informationsterminals ein Senden der Identifikationsinformation der bestimmten Webseite zusammen mit Identifikationsinformation der die Bildinformation enthaltenden durch das Informationsterminal gelesenen Webseite von dem Informationsterminal zu der Servicebereitstellvorrichtung auslöst,
die Servicebereitstellvorrichtung ferner aufweist:
eine Verarbeitungseinheit zur Beschaffung von Beziehungsinformation, die der Verwaltungsvorrichtung die Identifikationsinformation der bestimmten Webseite und die Identifikationsinformation der die Bildinformation enthaltenden Webseite sendet; Informationen bezüglich einer Beziehung zwischen der bestimmten Webseite und der die Bildinformation enthaltenden Webseite beschafft; und die beschafften Informationen an das Informationsterminal sendet, und
die Verwaltungsvorrichtung ferner aufweist:
eine Webseitenidentifikationsinformationsdatenbank, in der die Identifikationsinformation der bestimmten Webseite registriert ist, wobei der Identifikationsinformation die Identifikationsinformation der die Bildinformation enthaltenden Webseite zugeordnet ist, auf die die Identifikationsinformation der bestimmten Webseite eingestellt ist, und
eine Verifikationsverarbeitungseinheit, die die Beziehung zwischen der bestimmten Webseite und der die Bildinformation enthaltenden Webseite verifiziert, indem geprüft wird, ob die Identifikationsinformation der bestimmten Webseite und die Identifikationsinformation der die Bildinformation enthaltenden Webseite (beide von der Servicebereitstellvorrichtung gesendet) in Beziehung zueinander in der Webseitenidentifikationsinformationsdatenbank registriert sind; und der Servicebereitstellvorrichtung das Ergebnis der Verifikation mitteilt.

8. Authentifizierungssystem nach Anspruch 2, wobei
die Servicebereitstellvorrichtung ferner aufweist:
eine Verarbeitungseinheit zur Beschaffung einer Bezahlungsanfrage, die eine Bezahlungsanfrage (die Verkäuferidentifikationsinformation, Überweisungsbetragsinformation und Verwaltungsidentifikationsinformation enthält) von einem Verkäuferterminal empfängt,
eine Verbraucherkonto-Verwaltungsdatenbank, in der ein Konto registriert ist, wobei die Datenbank dem Konto persönliche Identifikationsinformation zuordnet, und
eine Verkäuferkonto-Verwaltungsdatenbank, in der ein Konto registriert ist, wobei die Datenbank dem Konto Verkäuferidentifikationsinformation zuordnet,
wobei die Verarbeitungseinheit der Servicebereitstellvorrichtung zur Beschaffung der persönlichen Identifikationsinformation die persönliche Identifikationsinformation zusammen mit Verwaltungsidentifikationsinformation von dem Informationsterminal beschafft, und
wenn die durch die Verarbeitungseinheit zur Beschaffung von Gewährungs- oder Verweigerungsinformation beschaffte Gewährungs- oder Verweigerungsinformation die Erlaubnis zur Bereitstellung des Services anzeigt, bezüglich einer Bezahlungsanfrage, die durch die Verarbeitungseinheit zur Beschaffung der Bezahlungsanfrage beschafft wurde und die die Verwaltungsidentifikationsinformation aufweist, die zusammen mit der persönlichen Identifikationsinformation durch die Verarbeitungseinheit zur Beschaffung der Identifikationsinformation beschafft wurde, die Servicebereitstell-Verarbeitungseinheit der Servicebereitstellvorrichtung einen durch die Überweisungsbetragsinformation in der Bezahlungsanfrage angezeigten Geldbetrag von einem Konto abbucht, das in der Verbraucherkonto-Verwaltungsdatenbank unter Zuordnung zu der persönlichen Identifikationsinformation registriert ist, die durch die Verarbeitungseinheit zur Beschaffung der persönlichen Identifikationsinformation beschafft wurde; den abgebuchten Geldbetrag auf ein Konto überweist, das in der Verkäuferkonto-Verwaltungsdatenbank unter Zuordnung zu der in der Bezahlungsanfrage enthaltenen Verkäuferidentifikationsinformation registriert ist; und dem Verkäuferterminal das Überweisungsergebnis mitteilt.

9. Authentifizierungssystem nach Anspruch 2, wobei
die Servicebereitstellvorrichtung ferner aufweist: eine Verbraucherkonto-Verwaltungsdatenbank, in der ein Konto registriert ist, wobei dem Konto persönliche Identifikationsinformation zuordnet ist; und eine Verkäuferkonto-Verwaltungsdatenbank, in der ein Konto registriert ist, wobei dem Konto Verkäuferidentifikationsinformation zuordnet ist,
wobei die Verarbeitungseinheit der Servicebereitstellvorrichtung zur Beschaffung der persönlichen Identifikationsinformation eine Bezahlungsanfrage von dem Informationsterminal beschafft, die die persönliche Identifikationsinformation, Verkäuferidentifikationsinformation und Überweisungsbetragsinformation enthält, und
wenn die durch die Verarbeitungseinheit zur Beschaffung von Gewährungs- oder Verweigerungsinformation beschaffte Gewährungs- oder Verweigerungsinformation die Erlaubnis zur Bereitstellung des Services anzeigt, die Servicebereitstell-Verarbeitungseinheit der Servicebereitstellvorrichtung einen durch die Überweisungsbetragsinformation in der Bezahlungsanfrage, die durch die Verarbeitungseinheit zur Beschaffung der persönlichen Identifikationsinformation beschafft wurde, angezeigten Geldbetrag von einem Konto abbucht, das in der Verbraucherkonto-Verwaltungsdatenbank unter Zuordnung zu der persönlichen Identifikationsinformation registriert ist; den abgebuchten Geldbetrag auf ein Konto überweist, das in der Verkäuferkonto-Verwaltungsdatenbank unter Zuordnung zu der in der Bezahlungsanfrage enthaltenen Verkäuferidentifikationsinformation registriert ist; und dem Verkäuferterminal das Überweisungsergebnis mitteilt.

10. Verfahren zur Authentifizierung, in dem die Authentifizierung eines Informationsterminals (40) dem ein Service bereitgestellt werden kann, unter Verwendung eines Authentifizierungssystems durchgeführt wird, das aufweist: eine Verwaltungsvorrichtung (20), die private Informationen verwaltet, und eine Servicebereitstellvorrichtung (10), die an die Verwaltungsvorrichtung (20) über ein Privatnetz (60) und an das Informationsterminal (40) über ein öffentliches Netz (50) angeschlossen ist, und die dem Informationsterminal (40) den Service bereitstellt, **dadurch gekennzeichnet, daß** das Verfahren aufweist:
einen ersten Schritt, in dem die Servicebereitstellvorrichtung (10) persönliche Identifikationsinformation (2021), die keine privaten Informationen enthält, über das öffentliche Netz (50) von dem Informationsterminal (40) beschafft,
einen zweiten Schritt, in dem die persönliche Identifikationsinformation (2021) zusammen mit der Serviceidentifikationsinformation (2031) über das Privatnetz (60) an die Verwaltungsvorrichtung (20) gesendet wird,
einen dritten Schritt, in dem die Verwaltungsvorrichtung (20) beurteilt, ob private Informationen (2022), die die Verwaltungsvorrichtung (20) unter Bezugnahme auf die von der Servicebereitstellvorrichtung (10) empfangene persönliche Identifikationsinformation (2021) verwaltet, vorbestimmte Servicebereitstellbedingungen (2032) erfüllt, die unter Zuordnung zu der Serviceidentifikationsinformation (2031) verwaltet werden und abhängig von dem Ergebnis der Beurteilung bestimmt, ob die Bereitstellung des Services gewährt oder verweigert wird,
einen vierten Schritt, in dem die Verwaltungsvorrichtung (20) Gewährungs- oder Verweigerungsinformation, die den Inhalt der Bestimmung zur Gewährung oder Verweigerung der Bereitstellung des Services anzeigt, an die Servicebereitstellvorrichtung (10) über das Privatnetz (60) sendet, und
einen fünften Schritt, in dem die Servicebereitstellvorrichtung (10) dem Informationsterminal (40) über das öffentliche Netz (50) den Service bereitstellt, wenn die von der Verwaltungsvorrichtung (20) gesendete Gewährungs- oder Verweigerungsinformation die Erlaubnis zur Bereitstellung des Services anzeigt.

11. Authentifizierungsverfahren nach Anspruch 10, wobei
das Informationsterminal eine Funktionsweise als Webbrowser aufweist,
die Servicebereitstellvorrichtung eine Funktionsweise als Webserver aufweist,
in dem vierten Schritt dem Informationsterminal eine bestimmte Webseite bereitgestellt wird, wenn die durch die Verarbeitungseinheit zur Beschaffung der Gewährungs- oder Verweigerungsinformation beschaffte Gewährungs- oder Verweigerungsinformation die Erlaubnis zur Bereitstellung des Services anzeigt.

12. Authentifizierungsverfahren nach Anspruch 10, wobei
das Informationsterminal eine Funktionsweise als Webbrowser aufweist,
die Servicebereitstellvorrichtung eine Netzverbindungsfunktion zum Verbinden des Informationsterminals über ein Netzwerk mit dem Webserver aufweist, und
es dem Informationsterminal in dem vierten Schritt möglich ist, eine bestimmte, durch den Webserver bereitgestellte Webseite zu lesen, wenn die durch die Verarbeitungseinheit zur Beschaffung der Gewährungs- oder Verweigerungsinformation beschaffte Gewährungs- oder Verweigerungsinformation die Erlaubnis zum Bereitstellen des Services anzeigt.

13. Authentifizierungssystem nach Anspruch 12, wobei
die bestimmte Webseite einen Zahlungsinhalt aufweist, und
das Verfahren ferner aufweist:
einen sechsten Schritt, in dem die Servicebereitstellvorrichtung eine Abrechnung über die Nutzung der bestimmten Webseite durch das Informationsterminal durchführt, dem das Lesen der bestimmten Webseite erlaubt ist.

14. Authentifizierungsverfahren nach Anspruch 10, wobei
das Verfahren ferner aufweist:
einen sechsten Schritt, in dem die Servicebereitstellvorrichtung eine Bezahlungsanfrage (die Verkäuferidentifikationsinformation, Überweisungsbetragsinformation und Verwaltungsidentifikationsinformation enthält) vor dem ersten Schritt von einem Verkäuferterminal empfängt,
in dem ersten Schritt persönliche Identifikationsinformation zusammen mit Verwaltungsidentifikationsinformation von dem Informationsterminal beschafft wird,
in dem vierten Schritt, wenn die durch die Verarbeitungseinheit empfangene Gewährungs- oder Verweigerungsinformation die Erlaubnis zur Bereitstellung des Services anzeigt, ein durch die Überweisungsbetragsinformation in der Bezahlungsanfrage angezeigter Geldbetrag, der von dem Verkäuferterminal empfangen wurde und die zusammen mit der persönlichen Identifikationsinformation von dem Informationsterminal beschaffte Verwaltungsidentifikationsinformation enthält, von einem Konto abgebucht wird, das unter Zuordnung zu der persönlichen Identifikationsinformation verwaltet wird, die von dem Informationsterminal beschafft wurde; der Geldbetrag auf ein Konto überwiesen wird, das unter Zuordnung zu der in der Bezahlungsanfrage enthaltenen Verkäuferidentifikationsinformation registriert ist; und dem Verkäuferterminal das Überweisungsergebnis mitgeteilt wird.

15. Authentifizierungsverfahren nach Anspruch 10, wobei
in dem ersten Schritt eine Bezahlungsanfrage von dem Informationsterminal beschafft wird, die die persönliche Identifikationsinformation, Verkäuferidentifikationsinformation und Überweisungsbetragsinformation enthält, und
in dem vierten Schritt, wenn die durch die Verarbeitungseinheit beschaffte Gewährungs- oder Verweigerungsinformation die Erlaubnis zur Bereitstellung des Services anzeigt, ein durch die Überweisungsbetragsinformation in der Bezahlungsanfrage, die durch das Informationsterminal beschafft wurde, angezeigter Geldbetrag von einem Konto abgebucht wird, das unter Zuordnung zu der in der Bezahlungsanfrage enthaltenen persönlichen Identifikationsinformation verwaltet wird; der Geldbetrag auf ein Konto überwiesen wird, das unter Zuordnung zu der in der Bezahlungsanfrage enthaltenen Verkäuferidentifikationsinformation verwaltet wird; und dem Verkäuferterminal das Überweisungsergebnis mitgeteilt wird.

## Revendications

1. Système d'authentification comportant un dispositif de gestion (20) qui gère des informations privées et un dispositif de fourniture de service (10) qui fournit un service à un terminal d'informations (40), et qui est couplé audit dispositif de gestion (20) via un réseau dédié (60) et audit terminal d'informations (40) via un réseau public (50), **caractérisé en ce que** ledit dispositif de gestion (20) comporte :
une base de données d'informations privées (202) dans laquelle des informations privées (2022) sont enregistrées, associant les informations privées à des informations d'identification personnelle (2021) qui n'incluent pas d'informations privées,
une unité de traitement d'acquisition d'informations d'identification personnelle (204) qui reçoit lesdites informations d'identification personnelle (2021) en provenance dudit dispositif de fourniture de service (10) via ledit réseau dédié (60),
une base de données de condition de fourniture (203) dans laquelle des informations d'identification de service (2031) qui identifient le service fourni par ledit dispositif de fourniture de service (10) et des conditions de fourniture de service (232) requises pour délivrer le service sont enregistrées,
une unité de traitement de détermination (205) qui lit les informations privées (2022) associées auxdites informations d'identification personnelle (2021) reçues en provenance dudit dispositif de fourniture de service (10), à partir de ladite base de données d'informations privées (202), qui lit les conditions de fourniture de service (2032) associées aux informations d'identification de service (2031) envoyées par ledit dispositif de fourniture de service (10), à partir de ladite base de données de conditions de fourniture (203), qui détermine si les informations privées (2022) satisfont aux conditions de fourniture de service (2032), et qui détermine l'acceptation ou le refus de fournir le service en fonction du résultat de la détermination, et
une unité de traitement de notification qui délivre audit dispositif de fourniture de service (10) des informations d'acceptation ou de refus indiquant le résultat de détermination de ladite unité de traitement de détermination (205) via ledit réseau dédié (60), et
ledit dispositif de fourniture de service (10) comporte :
une unité de traitement d'acquisition d'identification personnelle (105) qui acquiert des informations d'identification personnelle (2021) à partir dudit terminal d'informations (40) via ledit réseau public (50),
une unité de traitement d'acquisition d'informations d'acceptation ou de refus (106) qui envoie lesdites informations d'identification personnelle (2021) et lesdites informations d'identification de service (2031) acquises par ladite unité de traitement d'acquisition d'informations d'identification personnelle (105) audit dispositif de gestion (20) via ledit réseau dédié (60), pour acquérir lesdites informations d'acception ou de refus à partir dudit dispositif de gestion (20), et
une unité de traitement de fourniture de service (104) qui fournit le service audit terminal d'informations (40) lorsque lesdites informations d'acception ou de refus acquises par ladite unité de traitement d'acquisition d'informations d'acception ou de refus (106) indiquent l'autorisation de fournir le service.

2. Système d'authentification selon la revendication 1, dans lequel :
ladite base de données d'informations privées dudit dispositif de gestion, dans laquelle les informations privées conjointement avec un certificat de clé publique sont enregistrées, associe lesdites informations privées et ledit certificat de clé publique aux informations d'identification personnelle,
ladite unité de traitement de détermination dudit dispositif de gestion vérifie des informations de signature ajoutées aux informations d'identification personnelle envoyées par ledit dispositif de fourniture de service, en utilisant le certificat de clé publique enregistré en association avec lesdites informations d'identification personnelle dans ladite base de données d'informations privées, effectue ladite détermination lorsque la vérification a réussi, détermine l'acceptation ou le refus de fourniture du service en fonction du résultat de la détermination, et, d'autre part, détermine le rejet de la fourniture du service lorsque la vérification a échoué,
ladite unité de traitement d'acquisition d'informations d'identification personnelle dudit dispositif de fourniture de service acquiert les informations d'identification personnelle ajoutées aux informations de signature, depuis ledit terminal d'informations, et
ladite unité de traitement d'acquisition d'informations d'acception ou de refus dudit dispositif de fourniture de service envoie audit dispositif de gestion les informations d'identification personnelle ajoutées aux informations de signature, qui sont acquises par ladite unité de traitement d'acquisition d'informations d'identification personnelle, pour acquérir les informations d'acception ou de refus depuis ledit dispositif de gestion.

3. Système d'authentification selon la revendication 2, dans lequel :
ledit terminal d'informations a une fonction de navigateur de la toile mondiale,
ledit dispositif de fourniture de service a une fonction de serveur de la toile mondiale,
ladite unité de traitement de fourniture de service dudit dispositif de fourniture de service permet audit terminal d'informations de naviguer à travers une page particulière de la toile mondiale, lorsque les informations d'acception ou de refus acquises par ladite unité de traitement d'acquisition d'informations d'acception ou de refus indiquent l'autorisation de fournir le service.

4. Système d'authentification selon la revendication 2, dans lequel :
ledit terminal d'informations a une fonction de navigateur de la toile mondiale,
ledit dispositif de fourniture de service a une fonction de connexion à un réseau pour connecter ledit terminal d'informations au serveur de la toile mondiale via un réseau, et
ladite unité de traitement de fourniture de service dudit dispositif de fourniture de service permet audit terminal d'informations de naviguer à travers une page particulière de la toile mondiale délivrée par ledit serveur de la toile mondiale, lorsque les informations d'acception ou de refus acquises par ladite unité de traitement d'acquisition d'informations d'acception ou de refus indiquent l'autorisation de fournir le service.

5. Système d'authentification selon la revendication 4, dans lequel :
ladite page particulière de la toile mondiale est un contenu payant,
ladite unité de traitement de fourniture de service dudit dispositif de fourniture de service effectue la comptabilité pour l'utilisation de ladite page particulière de la toile mondiale par ledit terminal d'informations qui est autorisé à naviguer à travers ladite page particulière de la toile mondiale.

6. Système d'authentification selon la revendication 5, dans lequel :
ledit serveur de la toile mondiale, conservant ladite page particulière de la toile mondiale, conserve une page de la toile mondiale incluant des informations d'image auxquelles ladite page particulière de la toile mondiale est établie, dans un état où ledit terminal d'informations peut naviguer à travers ladite page de la toile mondiale incluant les informations d'image.

7. Système d'authentification selon la revendication 6, dans lequel :
lesdites informations d'image sont établies avec un lien, de sorte qu'une action de sélection desdites informations d'image d'un opérateur dudit terminal d'informations amènent les informations d'identification de ladite page particulière de la toile mondiale à être envoyées conjointement avec les informations d'identification de ladite page de la toile mondiale incluant les informations d'image en cours de navigation par ledit terminal d'informations, dudit terminal d'informations audit dispositif de fourniture de service,
ledit dispositif de fourniture de service comporte en outre :
une unité de traitement d'acquisition d'informations de relation qui envoie audit dispositif de gestion les informations d'identification de ladite page particulière de la toile mondiale et les informations d'identification de ladite page de la toile mondiale incluant les informations d'image, acquiert des informations concernant une relation entre ladite page particulière de la toile mondiale et ladite page de la toile mondiale incluant les informations d'image, et envoie les informations acquises audit terminal d'informations,
et
ledit dispositif de gestion comporte en outre :
une base de données d'informations d'identification de page de la toile mondiale, dans laquelle les informations d'identification de ladite page particulière de la toile mondiale sont enregistrées, associant lesdites informations d'identification aux informations d'identification de ladite page de la toile mondiale incluant les informations d'image auxquelles lesdites informations d'identification de ladite page particulière de la toile mondiale sont établies, et
une unité de traitement de vérification qui vérifie la relation entre ladite page particulière de la toile mondiale et ladite page de la toile mondiale incluant les informations d'image, en examinant si les informations d'identification de ladite page particulière de la toile mondiale et les informations d'identification de ladite page de la toile mondiale incluant les informations d'image (les deux étant envoyées par ledit dispositif de fourniture de service) sont enregistrées en association les unes avec les autres dans ladite base de données d'informations d'identification de page de la toile mondiale, et informe ledit dispositif de fourniture de service d'un résultat de vérification.

8. Système d'authentification selon la revendication 2, dans lequel :
ledit dispositif de fourniture de service comporte en outre :
une unité de traitement d'acquisition de demande de règlement qui reçoit une demande de règlement (qui inclut des informations d'identification du vendeur, des informations de montant de la transaction et des informations d'identification de gestion) en provenance d'un terminal du vendeur,
une base de données de gestion de compte client dans laquelle un compte est enregistré, associant le compte à des informations d'identification personnelle, et
une base de données de gestion de compte vendeur dans laquelle un compte est enregistré, associant le compte à des informations d'identification du vendeur,
ladite unité de traitement d'acquisition d'informations d'identification personnelle dudit dispositif de fourniture de service acquiert les informations d'identification personnelle conjointement avec des informations d'identification de gestion depuis ledit terminal d'informations, et
lorsque les informations d'acception ou de refus acquises par ladite unité de traitement d'acquisition d'informations d'acception ou de refus indiquent l'autorisation de fournir le service,
alors,
concernant une demande de règlement qui est acquise par ladite unité de traitement d'acquisition de demande de règlement et qui inclut les informations d'identification de gestion acquises conjointement avec lesdites informations d'identification personnelle par ladite unité de traitement d'acquisition d'informations d'identification personnelle,
ladite unité de traitement de fourniture de service dudit dispositif de fourniture de service retire une somme d'argent indiquée par les informations de montant de la transaction incluses dans ladite demande de règlement, d'un compte enregistré dans ladite base de données de gestion de compte client en association avec les informations d'identification personnelle acquises par ladite unité de traitement d'acquisition d'informations d'identification personnelle, transfère la somme d'argent retirée vers un compte enregistré dans ladite base de données de gestion de compte vendeur en association avec les informations d'identification du vendeur incluses dans ladite demande de règlement, et informe ledit terminal du vendeur d'un résultat de transfert.

9. Système d'authentification selon la revendication 2, dans lequel :
ledit dispositif de fourniture de service comporte en outre : une base de données de gestion de compte client dans laquelle un compte est enregistré, associant le compte à des informations d'identification personnelle, et une base de données de gestion de compte vendeur dans laquelle un compte est enregistré, associant le compte aux informations d'identification du vendeur,
ladite unité de traitement d'acquisition d'informations d'identification personnelle dudit dispositif de fourniture de service acquiert une demande de règlement qui inclut les informations d'identification personnelle, les informations d'identification du vendeur et les informations de montant de la transaction, depuis ledit terminal d'informations, et
lorsque les informations d'acception ou de refus acquises par ladite unité de traitement d'acquisition d'informations d'acception ou de refus indiquent l'autorisation de délivrer le service,
alors,
ladite unité de traitement de fourniture de service dudit dispositif de fourniture de service retire une somme d'argent indiquée par les informations de montant de la transaction incluses dans la demande de règlement acquise par ladite unité de traitement d'acquisition d'informations personnelles, d'un compte enregistré dans ladite base de données de gestion de compte client en association avec les informations d'identification personnelle incluses dans ladite demande de règlement, transfère la somme d'argent retirée vers un compte enregistré dans ladite base de données de gestion de compte vendeur en association avec l'identification du vendeur incluse dans lesdites informations de règlement, et informe ledit terminal d'informations d'un résultat de transfert.

10. Procédé d'authentification, dans lequel l'authentification d'un terminal d'informations (40) auquel un service peut être fourni est effectuée en utilisant un système d'authentification comportant un dispositif de gestion (20) qui gère des informations privées et un dispositif de fourniture de service (10) qui est couplé audit dispositif de gestion (20) via un réseau dédié (60) et audit terminal d'informations (40) via un réseau public (50), et qui fournit ledit service audit terminal d'informations (40), **caractérisé en ce que** ledit procédé comporte :
une première étape au cours de laquelle ledit dispositif de fourniture de services (10) acquiert des informations d'identification personnelle (2021) qui n'incluent pas d'informations privées depuis ledit terminal d'informations (40) via ledit réseau public (50),
une deuxième étape au cours de laquelle lesdites informations d'identification personnelle (2021) sont envoyées audit dispositif de gestion (20) conjointement avec des informations d'identification de service (2031) via ledit réseau dédié (60),
une troisième étape au cours de laquelle ledit dispositif de gestion (20) détermine si des informations privées (2022) que ledit dispositif de gestion (20) gère en association avec les informations d'identification personnelle (2021) reçues en provenance dudit dispositif de fourniture de service (10) satisfont aux conditions de fourniture de service prédéterminées (2032) qui sont gérées en association avec lesdites informations d'identification de service (2031), et détermine l'acceptation ou le refus de la fourniture du service en fonction du résultat de la détermination,
une quatrième étape au cours de laquelle ledit dispositif de gestion (20) envoie des informations d'acception ou de refus, qui indiquent un contenu de la détermination d'acception ou de refus de fourniture du service, audit dispositif de fourniture de service (10) via ledit réseau dédié (60), et
une cinquième étape au cours de laquelle ledit dispositif de fourniture de service (10) fournit le service audit terminal d'informations (40) via ledit réseau public (50), lorsque les informations d'acception ou de refus envoyées par ledit dispositif de gestion (20) indiquent l'autorisation de fournir le service.

11. Procédé d'authentification selon la revendication 10, dans lequel :
ledit terminal d'informations a une fonction de navigateur de la toile mondiale,
ledit dispositif de fourniture de service a une fonction de serveur de la toile mondiale, et
à ladite quatrième étape, une page particulière de la toile mondiale est délivrée audit terminal d'informations, lorsque les informations d'acception ou de refus envoyées par ledit dispositif de gestion indiquent l'autorisation de fournir le service.

12. Procédé d'authentification selon la revendication 10, dans lequel :
ledit terminal d'informations a une fonction de navigateur de la toile mondiale,
ledit dispositif de fourniture de service a une fonction de connexion à un réseau pour connecter ledit terminal d'informations à un serveur de la toile mondiale via un réseau, et
à ladite quatrième étape, ledit terminal d'informations est autorisé à naviguer à travers une page particulière de la toile mondiale délivrée par ledit serveur de la toile mondiale, lorsque les informations d'acception ou de refus envoyées par ledit dispositif de gestion indiquent l'autorisation de fournir le service.

13. Procédé d'authentification selon la revendication 12, dans lequel :
ladite page particulière de la toile mondiale est un contenu payant, et
ledit procédé comporte en outre :
une sixième étape au cours de laquelle ledit dispositif de fourniture de service effectue la comptabilité pour l'utilisation de ladite page particulière de la toile mondiale par ledit terminal d'informations qui est autorisé à naviguer à travers ladite page particulière de la toile mondiale.

14. Procédé d'authentification selon la revendication 10, dans lequel :
ledit procédé comporte en outre :
une sixième étape au cours de laquelle ledit dispositif de fourniture de service reçoit une demande de règlement (qui inclut des informations d'identification du vendeur, des informations de montant de la transaction et des informations d'identification de gestion) en provenance d'un terminal du vendeur, avant ladite première étape,
à ladite première étape, des informations d'identification personnelle sont reçues conjointement avec les informations d'identification de gestion en provenance dudit terminal d'informations,
à ladite quatrième étape, lorsque les informations d'acception ou de refus reçues par ledit dispositif de gestion indiquent l'autorisation de fournir le service, alors, une somme d'argent indiquée par les informations de montant de la transaction incluses dans la demande de règlement qui est reçue par ledit terminal du vendeur et qui inclut les informations d'identification de gestion acquises conjointement avec les informations d'identification personnelle depuis ledit terminal d'informations est retirée d'un compte géré en association avec les informations d'identification personnelle acquises depuis ledit terminal d'informations, ladite somme d'argent est transférée vers un compte géré en association avec les informations d'identification du vendeur incluses dans ladite demande de règlement, et un résultat de transfert est notifié audit terminal du vendeur.

15. Procédé d'authentification selon la revendication 10, dans lequel :
à ladite première étape, une demande de règlement, qui inclut des informations d'identification personnelle, des informations d'identification du vendeur et des informations de montant de la transaction, sont acquises depuis ledit terminal d'informations,
à ladite quatrième étape, lorsque les informations d'acception ou de refus acquises par ledit dispositif de gestion indiquent l'autorisation de fournir le service, alors, une somme d'argent indiquée par les informations de montant de la transaction incluses dans la demande de règlement qui est acquise depuis ledit terminal d'informations est retirée d'un compte géré en association avec les informations d'identification personnelle incluses dans ladite demande de règlement, ladite somme d'argent est transférée vers un compte géré en association avec les informations d'identification du vendeur incluses dans ladite demande de règlement, et un résultat du transfert est notifié audit terminal d'informations.
